# EUROPÄISCHE PATENTSCHRIFT

(11) **EP 2 409 255 B1**
(45) Veröffentlichungstag und Bekanntmachung des Hinweises auf die Patenterteilung: **27.05.2015**
(21) Anmeldenummer: 10707892.5
(22) Anmeldetag: 04.03.2010
(51) Int. Cl.: G06F 21/00

(54) **VERFAHREN ZUR ERZEUGUNG VON ASYMMETRISCHEN KRYPTOGRAFISCHEN SCHLÜSSELPAAREN**
METHOD FOR CREATING ASYMMETRICAL CRYPTOGRAPHIC KEY PAIRS
PROCÉDÉ DE PRODUCTION DE PAIRES DE CLEFS CRYPTOGRAPHIQUES ASYMÉTRIQUES

(30) Priorität: 20.03.2009 DE 102009001719
(43) Veröffentlichungstag der Anmeldung: 25.01.2012
(73) Patentinhaber: CompuGroup Medical AG, 56070 Koblenz (DE)
(72) Erfinder: SPALKA, Adrian, 56077 Koblenz (DE); LENHARDT, Jan, 56068 Koblenz (DE)
(74) Vertreter: Richardt Patentanwälte PartG mbB
(86) Internationale Anmeldenummer: PCT/EP2010/052733
(87) Internationale Veröffentlichungsnummer: WO 2010/105912

(56) Entgegenhaltungen:
- SANDHU R S: "On some cryptographic solutions for access control in a tree hierarchy" PROCEEDINGS 1987 FALL JOINT COMPUTER CONFERENCE - EXPLORING TECHNOLOGY: TODAY AND TOMORROW (CAT. NO.87CH2468-7) IEEE COMPUT. SOC. PRESS WASHINGTON, DC, USA, 1987, Seiten 405-410, XP007912584 ISBN: 0-8186-0811-0
- EHUD GUDES: "The Design of a Cryptography Based Secure File System" IEEE TRANSACTIONS ON SOFTWARE ENGINEERING, Bd. 6, Nr. 5, September 1980 (1980-09), Seiten 411-420, XP007912572
- KUO F H ET AL: "Cryptographic key assignment scheme for dynamic access control in a user hierarchy" IEE PROCEEDINGS: COMPUTERS AND DIGITAL TECHNIQUES, IEE, GB LNKD- DOI:10.1049/IP-CDT:19990311, Bd. 146, Nr. 5, 22. September 1999 (1999-09-22), Seiten 235-240, XP006013180 ISSN: 1350-2387
- ATALLAH M J ET AL: "DYNAMIC AND EFFICIENT KEY MANAGEMENT FOR ACCESS HIERARCHIES" PROCEEDINGS OF THE 12TH. ACM CONFERENCE ON COMPUTER AND COMMUNICATIONS SECURITY. (CCS'05). ALEXANDRIA, VA, NOV. 7 - 11, 2005; [ACM CONFERENCE ON COMPUTER AND COMMUNICATIONS SECURITY], NEW YORK, NY : ACM, US LNKD- DOI:10.1145/1102120.1102147, Bd. CONF. 12, 7. November 2005 (2005-11-07), Seiten 190-201, XP001241630 ISBN: 978-1-59593-226-6
- CHUNG ET AL: "Access control in user hierarchy based on elliptic curve cryptosystem" INFORMATION SCIENCES, AMSTERDAM, NL LNKD- DOI:10.1016/J.INS.2007.08.001, Bd. 178, Nr. 1, 9. Oktober 2007 (2007-10-09), Seiten 230-243, XP022289858 ISSN: 0020-0255

## Beschreibung

Die Erfindung betrifft ein Verfahren zur Erzeugung eines Satzes von asymmetrischen kryptografischen Schlüsselpaaren, ein Datenverarbeitungssystem zur Erzeugung eines Satzes von asymmetrischen kryptografischen Schlüsselpaaren, ein entsprechendes Computerprogrammprodukt sowie ein Verfahren zur Bereitstellung von Chiffraten, ein Datenverarbeitungssystem zur Bereitstellung von Chiffraten und ein entsprechendes Computerprogrammprodukt.

Chipkarten werden heutzutage in vielfältiger Form zur Ver- und Entschlüsselung von Daten eingesetzt. Ein Anwendungsgebiet für Chipkarten ist die sogenannte elektronische Gesundheitskarte, welche in Zukunft die Krankenversicherungskarte in Deutschland ersetzen soll. Ziel ist es dabei, eine Datenübermittlung zwischen medizinischen Leistungserbringern, Krankenkassen, Apotheken und Patienten in Zukunft kostengünstiger zu gestalten, zu vereinfachen und zu beschleunigen. Dazu gehört auch u.a. die Ermöglichung eines Zugriffs auf einen elektronischen Arztbrief, eine elektronische Krankenakte sowie ein elektronisches Rezept mit Hilfe der elektronischen Gesundheitskarte.

Somit können medizinische Datenobjekte (MDOs) wie ein elektronischer Arztbrief, eine elektronische Krankenakte oder ein elektronisches Rezept verschlüsselt und digital signiert auf einem zentralen Server gespeichert werden. Eine Verschlüsselung erfolgt dabei vorzugsweise über einen symmetrischen Schlüssel, der für jedes neue medizinische Datenobjekt einer elektronischen Krankenakte, wie z.B. einen elektronischen Arztbrief oder ein elektronisches Rezept, individuell zufällig erzeugt wird. Der symmetrische Schlüssel selbst wird nach seiner Erstellung beispielsweise mit einem öffentlichen Schlüssel verschlüsselt und zusammen mit den verschlüsselten medizinischen Datenobjekten auf dem zentralen Server abgelegt. Dieser zur Verschlüsselung verwendete öffentliche Schlüssel bildet zusammen mit einem privaten Schlüssel, welcher auf der elektronischen Gesundheitskarte abgespeichert ist, ein kryptografisches, asymmetrisches Schlüsselpaar. Damit ist gewährleistet, dass ausschließlich unter Verwendung des geheimen Gesundheitskartenschlüssels ein Zugriff auf die verschlüsselten medizinischen Datenobjekte möglich ist. Bei einem solchen Zugriff erfolgt zunächst eine Entschlüsselung des verschlüsselten symmetrischen Schlüssels mittels des geheimen Gesundheitskartenschlüssels, woraufhin dann mit dem entschlüsselten symmetrischen Schlüssel eine weitere Entschlüsselung der medizinischen Datenobjekte möglich ist. Wurde bei der Erstellung eines MDOs auch eine digitale Signatur mit dem geheimen Gesundheitskartenschlüssel erzeugt, so kann anschließend die Integrität des MDOs und die Authentizität des MDO-Erzeugers über die digitale Signatur verifiziert werden.

Aus dem Stand der Technik sind verschiedene Systeme zur Erzeugung und Verwaltung von kryptografischen Schlüsseln bekannt. Beispielsweise offenbart die WO 2008/026184 A2 ein hierarchisches Key-Management-System für den Zugriff auf verschlüsselte Daten. Die US 10/2008/0022361 beschreibt eine hierarchische Rechteverwaltung für ein Computer-Dateisystem. Die DE 101 34 489 B4 offenbart ein asymmetrisches Kryptografieverfahren zur Wiedergewinnung eines geheimen Schlüssels.

US 20050238175 A1 beschreibt eine Methode zum schnellen Löschen von verschlüsselt abgelegten Daten durch das Löschen des Schlüssels, der zur Verschlüsselung der Daten verwendet wurde. Der Schlüssel kann durch einen weiteren Schlüssel, welcher innerhalb einer Verschlüsselungshierarchie einen übergeordneten Platz einnimmt, verschlüsselt sein, welcher wiederum durch einen hierarchisch übergeordneten Schlüssel verschlüsselt sein kann. Anstatt wie in vorbekannten Verfahren die Verweise auf die Daten zu löschen oder sensible Daten durch mehrfaches Überschreiben anderer Daten endgültig zu löschen (Nachteil: hoher Zeitaufwand), werden gemäß 20050238175 A1 alle Daten, die in der Verschlüsselungshierarchie von einem bestimmten Schlüssel hierarchisch untergeordnet sind durch das Löschen dieses Schlüssels schnell und unwiederbringlich gelöscht. "Hierarchisch untergeordnet" bedeutet in diesem Kontext, dass die Daten entweder von dem gelöschten Schlüssel direkt verschlüsselt wurden, oder von einem der Schlüssel, die von dem gelöschten Schlüssel verschlüsselt wurden, verschlüsselt worden sind.

Um einen Verlust von kryptografischen Schlüsselpaaren entgegenzutreten, schlägt die DE 101 34 489 B4 ein asymmetrisches Kryptografieverfahren vor, welches unter Verwendung von Recovery-Zertifikaten und sogenannten Recovery-Cards vorschlägt, den geheimen Schlüssel einer Rechnereinrichtung mit Schlüsseln wenigstens zweier unterschiedlicher Recovery-Rechnereinrichtungen zu verschlüsseln und eine entsprechende Anzahl an den verschlüsselten Schlüssel aufweisenden Recovery-Zertifikaten zu erstellen. Dies ermöglicht eine Wiedergewinnung und Nutzung des geheimen Schlüssels, ohne dass dieser außerhalb einer Smartcard im Klartext vorliegt.

Der Artikel "On Some Cryptographic Solutions for Access Control in a Tree Hierarchy" von Ravinderpal S. Sandhu (Proceedings 1987 Fall Joint Computer Conference-Exploring Technology: Today and Tomorrow (CAT. NO. 87CH2468-7) IEEE Comput. Soc. Press Washington, DC, USA, 1987, Seiten 405-410) befasst sich mit dem Zugangs-Kontrollproblem in einem System in dem Nutzer und Informationen in Sicherheitsklassen klassifiziert sind, welche als Baumstruktur aufgebaut sind, wobei die vertraulichste Sicherhietsklasse an der Wurzel der Baumstruktur angesiedelt ist. Dabei werden einige kryptographische Techniken, welche bisher in der Fachliteratur vorgeschlagen wurden als Lösung für dieses Problem diskutiert.

Demgegenüber liegt der Erfindung die Aufgabe zugrunde, ein verbessertes Verfahren zur Erzeugung eines Satzes von asymmetrischen kryptografischen Schlüsselpaaren, ein Verfahren zur Bereitstellung von Chiffraten sowie entsprechende Datenverarbeitungssysteme und Computerprogrammprodukte zu schaffen.

Die der Erfindung zugrundeliegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Verfahren zur Erzeugung eines Satzes von asymmetrischen kryptografischen Schlüsselpaaren geschaffen, wobei der Satz von Schlüsselpaaren ein erstes Schlüsselpaar und ein zweites Schlüsselpaar aufweist, wobei das erste Schlüsselpaar durch einen ersten privaten und einen ersten öffentlichen Schlüssel gebildet wird und das zweite Schlüsselpaar durch einen zweiten privaten und einen zweiten öffentlichen Schlüssel gebildet wird, wobei dem ersten und zweiten Schlüsselpaar ein erstes Chiffrat zugeordnet ist, wobei das erste Chiffrat durch eine Verschlüsselung des zweiten privaten Schlüssels mit dem ersten öffentlichen Schlüssel gebildet wird, wobei das Verfahren die Schritte umfasst:
- Hinzufügen eines dritten asymmetrischen kryptografischen Schlüsselpaars zu dem Satz von Schlüsselpaaren, wobei das dritte Schlüsselpaar durch einen dritten privaten und einen dritten öffentlichen Schlüssel gebildet wird,
- Erzeugung eines zweiten Chiffrats durch Verschlüsselung des dritten privaten Schlüssels mit dem ersten öffentlichen Schlüssel,
- Speicherung des zweiten Chiffrats.

Dabei weist der Satz von Schlüsselpaaren eine gerichtete Graphstruktur auf, wobei die Knoten des Graphs die Schlüsselpaare repräsentieren, wobei eine Abhängigkeit zwischen einem Vorgänger-Schlüsselpaar und einem dem Vorgänger-Schlüsselpaar im Graph unmittelbar nachfolgenden Nachfolger-Schlüsselpaar durch ein Chiffrat gebildet wird, wobei das Chiffrat durch Verschlüsselung des privaten Schlüssels des Nachfolger-Schlüsselpaars mit dem öffentlichen Schlüssel des Vorgänger-Schlüsselpaars gebildet ist, wobei bis auf das den Wurzelknoten des Graphen bildende Schlüsselpaar jedes Schlüsselpaar im Graph durch mindestens ein Chiffrat von einem anderen Schlüsselpaar abhängig ist.

Ferner sind hierbei ein erstes Datenverarbeitungssystem und ein zweites Datenverarbeitungssystem vorgesehen, die über ein Netzwerk miteinander verbunden sind, wobei das erste Datenverarbeitungssystem zur Berechnung der Chiffraten sowie der Durchführung von Ver- und Entschlüsselungsvorgängen der Datenobjekte dient und das zweite Datenverarbeitungssystem (224) zur Datenspeicherung und der Ermittlung von Chiffratssequenzen dient, und wobei das erste Datenverarbeitungssystem (200) eine vertrauenswürdige Stelle wie eine Zertifizierungsstelle oder ein Trust-Centre ist

Ohne Beschränkung der Allgemeinheit wird im Folgenden davon ausgegangen, dass alle betrachteten kryptografischen Schlüsselpaare nach einem auf elliptischen Kurven basierenden Kryptosystem aufgebaut sind. Allerdings lässt sich das Grundprinzip auch auf jegliche andere Arten von Verfahren zur Erzeugung von asymmetrischen Schlüsseln wie RSA-Verfahren, das Rabin-Verfahren, das Elgamal-Verfahren o.Ä. anwenden. Weiterhin gelten die folgenden Bezeichnungen:
- *Kᵢ = (Gᵢ, Oᵢ)* mit i = 1, 2, 3, ... bezeichne ein asymmetrisches kryptografisches Schlüsselpaar.
- *Gᵢ* bezeichne die geheime Schlüsselpaarkomponente bzw. "den geheimen Schlüssel" eines asymmetrischen kryptografischen Schlüsselpaars *Kᵢ*.
- *Oᵢ* bezeichne die öffentliche Schlüsselpaarkomponente bzw. "den öffentlichen Schlüssel" eines asymmetrischen kryptografischen Schlüsselpaars *Kᵢ.*
- *V_{A}(DO, Oᵢ)* bezeichne eine auf einem asymmetrischen Kryptosystem basierende Verschlüsselungsfunktion, die auf einem Datenobjekt *DO* unter Verwendung eines öffentlichen Schlüssels *Oᵢ* ausgeführt wird.
- *C_DO_Oᵢ = V_{A}(DO, Oᵢ)* bezeichne ein "Chiffrat" bzw. das Ergebnis der Verschlüsselungs-funktion *V_{A},* angewendet auf das Datenobjekt *DO* unter Verwendung des öffentlichen Schlüssels *Oᵢ.*
- *E_{A}(C_DO_Oᵢ, Gᵢ)* = *DO* bezeichne eine auf einem asymmetrischen Kryptosystem basierende Entschlüsselungsfunktion, die auf einem verschlüsselten Datenobjekt *C_DO_Oᵢ* unter Verwendung eines geheimen Schlüssels *Gᵢ* ausgeführt wird. Dabei gilt, dass *Gᵢ* zusammen mit dem für die Verschlüsselung von *C _DO_Oᵢ* verwendeten öffentlichen Schlüssel *Oᵢ* ein asymmetrisches kryptografisches Schlüsselpaar bildet.

Den Kern der Erfindung bildet die Verknüpfung zweier asymmetrischer kryptografischer Schlüsselpaare *K₁* und *K₂,* welche nach einem beliebigen asymmetrischen Kryptosystem aufgebaut sind. Dabei wird die Verknüpfung der beiden Schlüsselpaare dadurch hergestellt, dass der geheime Schlüssel G₂ des zweiten Schlüsselpaars *K₂* mit dem öffentlichen Schlüssel *O₁* des ersten Schlüsselpaars *K₁* verschlüsselt und das Chiffrat *C_G₂_O₁ = V_{A}(G₂, O₁)* gespeichert wird. Diese Speicherung von *C_G₂_O₁* kann im selben Speicher erfolgen, in dem auch alle öffentlichen Schlüssel *Oᵢ* gespeichert werden. Dieser Speicher wird im Folgenden die "Public-Key-Infrastruktur" oder "PKI" genannt.

Durch die Speicherung und Abrufbarkeit des Chiffrats *C_G₂_O₁* wird eine Abhängigkeit zwischen den Schlüsselpaaren *K₁* und *K₂* hergestellt: Ein Benutzer, der im Besitz des geheimen Schlüssels *G₁* ist, kann damit nicht nur alle mit dem zugehörigen öffentlichen Schlüssel *O₁* verschlüsselten Datenobjekte entschlüsseln, sondern auch das Chiffrat *C_G₂_O₁,* also den verschlüsselten geheimen Schlüssel *G₂* des Schlüsselpaars *K₂.* Mit *G₂* kann der Benutzer dann auch alle mit dem öffentlichen Schlüssel *O₂* des Schlüsselpaars *K₂* verschlüsselten Datenobjekte entschlüsseln.

Die durch die Speicherung von *C_G₂_O₁* entstandene Abhängigkeit zwischen den beiden Schlüsselpaaren *K₁* und *K₂* lässt sich als gerichteter Graph darstellen, bei dem die Schlüsselpaare *K₁* und *K₂* als Knoten des Graphen dargestellt werden und das öffentlich gespeicherte Chiffrat *C*_*G₂*_*O₁ = V_{A}(G₂, O₁)* als die gerichtete Kante von *K₁* nach *K₂* zwischen den beiden Knoten. Die Verbindung von *K₁* nach *K₂* besagt also, dass das Chiffrat *C_G₂_O₁ = V_{A}(G₂, O₁)* öffentlich gespeichert ist und damit bei Besitz des geheimen Schlüssels *G₁* des Schlüsselpaars *K₁* der geheime Schlüssel *G₂* des Schlüsselpaars *K₂* ebenfalls zugänglich ist.

Ausführungsformen der Erfindung haben den Vorteil, dass durch einen geheimen Schlüssel eines einzigen Schlüsselpaars Zugriff auf die geheimen Schlüssel mehrerer Schlüsselpaare erlangt werden kann. Sind beispielsweise Daten mit dem zweiten oder dritten öffentlichen Schlüssel verschlüsselt, so genügt die Kenntnis des ersten geheimen Schlüssels, um damit eine Datenentschlüsselung unter Verwendung der ersten und zweiten Chiffrate durchzuführen.

Ferner lassen sich durch Verwendung einer gerichteten Graphstruktur in einfacher Weise logische Strukturen aufbauen, beispielsweise indem als Graph eine Baumstruktur verwendet wird, welche es ermöglicht, in hierarchischer Weise auf voneinander durch die Chiffrate abhängige Schlüsselpaare zuzugreifen. Ein Benutzer, welcher über eines der Schlüsselpaare in der Graphstruktur verfügt, ist damit in der Lage, alle nachfolgenden Schlüsselpaare für Ver- und Entschlüsselungsvorgänge zu verwenden. Schlüsselpaare hingegen, welche sich nicht im Pfad der Graphstruktur, nachfolgend dem Schlüsselpaar, über welches ein Benutzer verfügt, befinden, liegen damit außerhalb des Zugriffsbereichs des Benutzers, womit sich in einfacher Weise hierarchische Strukturen implementieren lassen: So können verschiedene Hierarchieebenen des Graphs verschiedenen Benutzergruppen zugeordnet werden, sodass sich insgesamt beispielsweise die hierarchische Struktur einer Firmenorganisation in einfacher Weise abbilden lässt. Ein Schlüsselpaar eines Wurzelknotens wird beispielsweise einem Management zugeordnet, welches damit in der Lage ist, Zugriff auf sämtliche nachfolgenden Schlüsselpaare für alle Ver- und Entschlüsselungsvorgänge zu haben. Eine Hierarchieebene darunter befinden sich Schlüsselpaare, welche einzelnen Abteilungsleitern zugeordnet sind. Diesen Schlüsselpaaren untergeordnet sind wiederum Schlüsselpaare einzelner Mitarbeiter, welche lediglich auf Ver- und Entschlüsselungsvorgänge in ihrem speziellen Arbeitsbereich zugreifen können sollen.

Es sei jedoch angemerkt, dass die beschriebene Graphstruktur nicht nur auf einfache Baumstrukturen beschränkt ist, sondern allgemein eine beliebige Art von Graphen, wie azyklische oder zyklische Graphen, zulässt. Allgemein können damit beliebige Arten von Netzwerken abgebildet werden, über welche in komplexer Weise Schlüsselpaare im Zusammenhang stehen. Ein Anwendungsgebiet hierfür kann beispielsweise ein sicherer Datenaustausch oder in spezieller Weise eine sichere Kommunikation in sogenannten Online-Communities (Community Plattform) sein, bei welchen eine Vielzahl von Nutzern in einem Netzwerk, wie dem Internet, miteinander in Kontakt stehen, um sich dort auszutauschen.

Nach einer Ausführungsform weist das Datenverarbeitungssystem Eingabemittel, einen Bildschirm und eine Schnittstelle auf zur Kommunikation mit einem externen Gerät, insbesondere einer Chipkarte und dem Netzwerk.

Nach einer weiteren Ausführungsform weist das Datenverarbeitungssystem ein Modul zur Berechnung von Chiffraten und ein Modul zur Durchführung von Kryptographievorgängen wie das Verschlüsseln und Entschlüsseln von Datenobjekten auf.

Nach einer weiteren Ausführungsform weist das zweite Datenverarbeitungssystem einen Prozessor auf zur Durchführung von Programminstruktionen wie der Ermittlung einer Sequenz von Chiffraten und/oder der Validierung der Gültigkeit eines Chiffrats und eine Schnittstelle zur Kommunikation mit dem Netzwerk.

Nach einer weiteren Ausführungsform ist eine Chipkarte mit einem Prozessor vorgesehen, auf der ein privater Schlüssel gespeichert ist, wobei der Prozessor den Entschlüsselungsvorgang des Chiffrats durchführt

Nach einer Ausführungsform der Erfindung umfasst das Verfahren ferner die Schritte des Hinzufügens eines asymmetrischen kryptografischen Nachfolger-Schlüsselpaars zu dem Satz von Schlüsselpaaren, wobei das Nachfolger-Schlüsselpaar durch einen privaten und einen öffentlichen Nachfolger-Schlüssel gebildet wird, wobei durch ein Schlüsselpaar aus dem Satz von Schlüsselpaaren ein Vorgänger-Schlüsselpaar gebildet wird, wobei das Vorgänger-Schlüsselpaar einen privaten und einen öffentlichen Vorgänger-Schlüssel aufweist. Das Verfahren setzt sich fort mit der Erzeugung eines dritten Chiffrats durch Verschlüsselung des privaten Schlüssels des Nachfolger-Schlüsselpaars mit dem öffentlichen Schlüssel des Vorgänger-Schlüsselpaars und der Speicherung des dritten Chiffrats.

Bei einem Vorgänger-Schlüsselpaar handelt es sich um ein beliebiges Schlüsselpaar des Satzes von Schlüsselpaaren. Bei dem Nachfolgerschlüsselpaar handelt es sich um ein beliebiges weiteres zusätzliches Schlüsselpaar, welches dem Satz von Schlüsselpaaren hinzugefügt wird, wobei hierfür eine Abhängigkeit zwischen dem Vorgänger-Schlüsselpaar und dem Nachfolgerschlüsselpaar hergestellt wird, indem ein Chiffrat erzeugt wird. Das Chiffrat wird durch Verschlüsseln des privaten Schlüssels des Nachfolger-Schlüsselpaars mit dem öffentlichen Schlüssel des Vorgängerschlüsselpaars erzeugt.

Die Entwicklung des Graphen kann also so erfolgen, dass ein neuer Knoten mit ein oder mehreren Kanten oder eine neue Kante zu bestehenden Knoten eingefügt wird.

Nach einer weiteren Ausführungsform der Erfindung ist bis auf das den Wurzelknoten des Graphen bildende Schlüsselpaar jedes Schlüsselpaar im Graph durch genau ein Chiffrat von einem anderen Schlüsselpaar abhängig.

Nach einer weiteren Ausführungsform der Erfindung weist der Satz von Schlüsselpaaren zwei beliebige Schlüsselpaare mit je einem privaten und einen öffentlichen Schlüssel auf, wobei das Verfahren ferner die Schritte umfasst des Erzeugens eines vierten Chiffrats durch Verschlüsselung des privaten Schlüssels des ersten Schlüsselpaars der beliebigen Schlüsselpaare mit dem öffentlichen Schlüssel des zweiten Schlüsselpaars der beliebigen Schlüsselpaare und der Speicherung des vierten Chiffrats. Eine solche Erweiterung des Satzes von Schlüsselpaaren ist damit unabhängig von der Verwendung von Vorgänger- und Nachfolger-Schlüsselpaaren und erlaubt die Verknüpfung zweier beliebiger Schlüsselpaare in einem Graph von Schlüsselpaaren.

So kann beispielsweise temporär eine Abhängigkeit zwischen zwei Schlüsselpaaren hergestellt werden, welche einen Benutzer in die Lage versetzt, beide Schlüsselpaare und deren Nachfolger für Ver- und Entschlüsselungsvorgänge, beispielsweise über einen gewissen Zeitraum hinweg, zu verwenden. Soll zu einem späteren Zeitpunkt eine weitere Verknüpfung der beiden Schlüsselpaare aufgehoben werden, so genügt es, die die beiden Schlüsselpaare verknüpfende Chiffrate für diesen entsprechenden Benutzer nicht mehr zugänglich zu machen, z.B. zu löschen.

Nach einer weiteren Ausführungsform der Erfindung werden die Chiffrate in einer vertrauenswürdigen Stelle gespeichert. Vorzugsweise werden zusammen mit den Chiffraten auch Klassifizierungsmerkmale gespeichert, wobei die Klassifizierungsmerkmale eine Gültigkeit der Chiffrate festlegen, wobei die Gültigkeit angibt, dass nach Ablauf der Gültigkeit eine Verwendung der Chiffrate für weitere Datenverarbeitungsvorgänge verhindert werden soll; insbesondere kann das betreffende Chiffrat nach Ablauf der Gültigkeit gelöscht werden. Damit ist sichergestellt, dass ein Zugriff auf die Chiffrate kontrolliert werden kann.

Klassifizierungsmerkmale bezüglich der Gültigkeit von Schlüsselpaaren innerhalb von Informationssystemsitzungen können sein:
- Gültigkeit nach Zeitintervall: Es wird serverseitig im Informationssystem gespeichert, innerhalb welches Zeitintervalls ein Schlüsselpaar gültig ist. Wenn ein Benutzer versucht, ein "abgelaufenes" Schlüsselpaar *Kᵢ* zu benutzen (d.h., der Benutzer eröffnet eine Sitzung beim Informationssystem, bei der er sich mit dem Schlüsselpaar *Kᵢ* authentisiert), verweigert das Informationssystem ihm dies.
- Gültigkeit nach Anzahl der Benutzungen: Es wird serverseitig im Informationssystem gespeichert, wie oft ein Schlüsselpaar maximal benutzt werden kann und wie oft es bereits benutzt wurde (d.h. wie oft eine Sitzung unter Verwendung des Schlüsselpaars bei der Authentisierung eröffnet wurde). Wenn die Anzahl der bereits erfolgten Benutzungen eines Schlüsselpaars *Kᵢ* dessen Maximalanzahl erreicht hat, verweigert das Informationssystem eine erneute Benutzung von *Kᵢ.*
- Gültigkeit nach Art der Benutzung: Es wird serverseitig im Informationssystem für jedes Schlüsselpaar gespeichert, welche Operationen in einer Sitzung zulässig sind, die unter Verwendung des Schlüsselpaars bei der Authentisierung eröffnet wurde. Wenn der Benutzer eine Operation durchzuführen versucht, die für die gerade bestehende Sitzung nicht zulässig ist, verweigert das Informationssystem dies.

Ausgehend davon lassen sich nun vielfältige weitere Nutzungsszenarien konstruieren, die ebenfalls lediglich diese Merkmale variieren.

Als Beispiel sei eine elektronische Patientenakte genannt, bei der ein Benutzer (ein Patient) einem anderen Benutzer (ein Arzt) ein Zugriffsrecht auf seine eigene Akte erteilt, jedoch lediglich für maximal fünf Zugriffe auf die Akte und in einem Zeitfenster von nur einem Monat; darüber hinaus darf der Arzt auch ausschließlich lesend auf die Akte des Patienten zugreifen. Der Patient erzeugt also ein neues Schlüsselpaar *K_{P}*, bei dem der geheime Schlüssel *G₀* des Schlüsselpaars des Patienten mit dem öffentlichen Schlüssel Op des Arztes verschlüsselt und das Chiffrat *C_G₀_O_{P}* öffentlich im Informationssystem gespeichert wird. Dieses Schlüsselpaar stellt der Patient dem Arzt zur Verfügung. Beispielsweise kann dieses Schlüsselpaar so attributiert sein, dass es nur einmal für eine Entschlüsselungsoperation verwendet werden kann. Das Schlüsselpaar ist dann also als TAN ausgebildet.

Damit hat der Arzt nun innerhalb eines Monats fünf Mal die Möglichkeit, eine Sitzung beim Informationssystem zu eröffnen, innerhalb der er die Akte des Patienten lediglich lesen kann. Ein schreibender Zugriff auf die Akte des Patienten oder ein Versuch Rechte zu vergeben werden vom Informationssystem zurückgewiesen. Nach Ablauf des Zeitintervalls kann der Arzt genauso wie nach der fünften Benutzung keine Sitzung unter Verwendung des Schlüsselpaars *K_{P}* bei der Authentisierung beim Informationssystem mehr eröffnen.

Dies erfordert vorzugsweise eine Authentisierung eines Benutzers gegenüber der vertrauenswürdigen Stelle, sodass in entsprechender Weise ein Zugriff auf die Chiffrate gesteuert werden kann.

Nach einer weiteren Ausführungsform der Erfindung werden der zweite private Schlüssel und/oder der private Nachfolger-Schlüssel und/oder der private Schlüssel des ersten Schlüsselpaars der beliebigen Schlüsselpaare von einem tragbaren Datenträger empfangen. Beispielsweise handelt es sich bei dem tragbaren Datenträger um eine Chipkarte, welche gegebenenfalls auch einen Prozessor aufweisen kann, wobei das Verfahren zur Erzeugung der Schlüssel und/oder Ver- und Entschlüsselungsverfahren unter Verwendung der Schlüsselpaare von dem Prozessor des tragbaren Datenträgers durchgeführt wird.

Beispielsweise kann es sich bei dem tragbaren Datenträger um eine Chipkarte, in einer konkreten Anwendung die elektronische Gesundheitskarte eines Patienten, handeln.

In einem weiteren Aspekt betrifft die Erfindung ein Computerprogrammprodukt mit von einem Prozessor ausführbaren Instruktionen zur Durchführung der Verfahrensschritte des erfindungsgemäßen Verfahrens.

In einem weiteren Aspekt betrifft die Erfindung ein Datenverarbeitungssystem zur Erzeugung eines Satzes von asymmetrischen kryptografischen Schlüsselpaaren.

In einem weiteren Aspekt betrifft die Erfindung ein Verfahren zur Bereitstellung von Chiffraten, wobei die Chiffrate einem Satz von asymmetrischen kryptografischen Schlüsselpaaren zugeordnet sind, wobei der Satz von Schlüsselpaaren eine gerichtete Graphstruktur aufweist, wobei die Knoten des Graphs die Schlüsselpaare repräsentieren, wobei eine Abhängigkeit zwischen einem Vorgänger-Schlüsselpaar und einem dem Vorgänger-Schlüsselpaar im Graph unmittelbar nachfolgenden Nachfolger-Schlüsselpaar durch ein Chiffrat gebildet wird, wobei das Chiffrat durch Verschlüsselung des privaten Schlüssels des Nachfolger-Schlüsselpaars mit dem öffentlichen Schlüssel des Vorgänger-Schlüsselpaars gebildet ist, wobei das Verfahren die Chiffrat-Bereitstellungsschritte umfasst:
- Empfang einer ersten und einer zweiten Kennung, wobei die erste Kennung einem ersten der Knoten zugeordnet ist und die zweite Kennung einem zweiten der Knoten zugeordnet ist,
- Ermittlung aller Chiffrate, welche sequentiell in der Graphstruktur eine Abhängigkeit zwischen dem ersten der Knoten und dem zweiten der Knoten beschreiben, falls ein solcher Pfad zwischen den ersten und zweiten Knoten existiert,
- Bereitstellung der ermittelten Sequenz von Chiffraten.

Dabei weist der Satz von Schlüsselpaaren eine gerichtete Graphstruktur auf, wobei die Knoten des Graphs die Schlüsselpaare repräsentieren, wobei eine Abhängigkeit zwischen einem Vorgänger-Schlüsselpaar und einem dem Vorgänger-Schlüsselpaar im Graph unmittelbar nachfolgenden Nachfolger-Schlüsselpaar durch ein Chiffrat gebildet wird, wobei das Chiffrat durch Verschlüsselung des privaten Schlüssels des Nachfolger-Schlüsselpaars mit dem öffentlichen Schlüssel des Vorgänger-Schlüsselpaars gebildet ist, wobei bis auf das den Wurzelknoten des Graphen bildende Schlüsselpaar jedes Schlüsselpaar im Graph durch mindestens ein Chiffrat von einem anderen Schlüsselpaar abhängig ist.

Ferner sind hierbei ein erstes Datenverarbeitungssystem und ein zweites Datenverarbeitungssystem vorgesehen, die über ein Netzwerk miteinander verbunden sind, wobei das erste Datenverarbeitungssystem zur Berechnung der Chiffraten sowie der Durchführung von Ver- und Entschlüsselungsvorgängen der Datenobjekte dient und das zweite Datenverarbeitungssystem (224) zur Datenspeicherung und der Ermittlung von Chiffratssequenzen dient, und wobei das erste Datenverarbeitungssystem (200) eine vertrauenswürdige Stelle wie eine Zertifizierungsstelle oder ein Trust-Centre ist Durch das Verfahren zur Bereitstellung von Chiffraten ist es möglich, ausgehend von einem Satz von Schlüsselpaaren und einem beliebigen asymmetrischen kryptografischen Schlüsselpaar dieses Satzes, einem Benutzer eine Sequenz von Chiffraten bereitzustellen, welche vom Benutzer unter Verwendung seines zur Verfügung stehenden Schlüsselpaares sequentiell und aufeinander folgend entschlüsselt werden können. Damit kann ausgehend von einem beliebigen Schlüsselpaar eines Benutzers unter Verwendung der Sequenz von Chiffraten ein "Pfad" von Schlüsseln bereitgestellt werden, sodass schließlich der Benutzer ausgehend von seinem persönlichen Schlüsselpaar Zugriff auf ein beliebiges anderes Schlüsselpaar erlangen kann, welches im Pfad der Schlüsselpaare, ausgehend von seinem persönlichen Schlüsselpaar, liegt. Der Benutzer muss hierzu lediglich die erste Kennung angeben, welche sein persönliches Schlüsselpaar kennzeichnet, als auch die weitere Kennung angeben, welche jenes Schlüsselpaar kennzeichnet, auf welches der Benutzer gerne Zugriff erhalten möchte. Daraufhin ermittelt das erfindungsgemäße Verfahren automatisch einen Pfad zwischen diesen beiden Schlüsselpaaren, falls existent, durch Bereitstellung einer entsprechenden Sequenz von Chiffraten, deren sequentielle Entschlüsselung ausgehend vom Schlüsselpaar des Benutzers einen Zugriff auf das gewünschte Schlüsselpaar (des zweiten Knotens) ermöglicht.

Nach einer Ausführungsform weist das Datenverarbeitungssystem Eingabemittel, einen Bildschirm und eine Schnittstelle auf zur Kommunikation mit einem externen Gerät, insbesondere einer Chipkarte und dem Netzwerk.

Nach einer weiteren Ausführungsform weist das Datenverarbeitungssystem ein Modul zur Berechnung von Chiffraten und ein Modul zur Durchführung von Kryptographievorgängen wie das Verschlüsseln und Entschlüsseln von Datenobjekten auf.

Nach einer weiteren Ausführungsform weist das zweite Datenverarbeitungssystem einen Prozessor auf zur Durchführung von Programminstruktionen wie der Ermittlung einer Sequenz von Chiffraten und/oder der Validierung der Gültigkeit eines Chiffrats und eine Schnittstelle zur Kommunikation mit dem Netzwerk.

Nach einer weiteren Ausführungsform ist eine Chipkarte mit einem Prozessor vorgesehen, auf der ein privater Schlüssel gespeichert ist, wobei der Prozessor den Entschlüsselungsvorgang des Chiffrats durchführt

Nach einer weiteren Ausführungsform der Erfindung ist bis auf das den Wurzelknoten des Graphen bildende Schlüsselpaar jedes Schlüsselpaar im Graph durch mindestens ein Chiffrat von einem anderen Schlüsselpaar abhängig.

Nach einer weiteren Ausführungsform der Erfindung wird die Sequenz von Chiffraten nach einer erfolgreichen Authentisierung ermittelt und/oder bereitgestellt. Damit ist, wie bereits oben erwähnt, sichergestellt, dass ein unbefugter Zugriff auf Chiffrate verhindert wird. Damit können Chiffraten auch entsprechende Klassifizierungsmerkmale bezüglich der Gültigkeit von Schlüsselpaaren innerhalb von Informationssystemsitzungen zugeordnet werden. In diesem Fall sind die Chiffrate mit Klassifizierungsmerkmalen verknüpft, wobei die Klassifizierungsmerkmale eine Gültigkeit der Chiffrate festlegen, wobei die Gültigkeit angibt, dass nach Ablauf der Gültigkeit eine Bereitstellung der Chiffrate verhindert werden soll, wobei eine Bereitstellung der Chiffrate nur dann erfolgt, wenn die Gültigkeit der Chiffrate erfolgreich validiert wurde. Vorzugsweise werden die betreffenden Chiffrate nach Ablauf der Gültigkeit gelöscht.

Nach einer weiteren Ausführungsform der Erfindung ist die zweite Kennung einem Datenobjekt zugeordnet, wobei das Datenobjekt mit dem öffentlichen Schlüssel des Schlüsselpaars des zweiten der Knoten verschlüsselt ist. In anderen Worten sind dabei vorzugsweise Datenobjekte von verschiedenen Benutzern mit unterschiedlichen Schlüsselpaaren der Benutzer verschlüsselt, wobei im Falle eines Graphen in Form eines Baumes die unterste Hierarchieebene des Abhängigkeitsbaumes, d.h. die "Blätter" der baumförmigen Abhängigkeitshierarchie jene Schlüsselpaare repräsentieren, mit welchen eine Verschlüsselung der Datenobjekte vorgenommen wird. Wenn ein Benutzer also eines seiner Datenobjekte abrufen und entschlüsseln möchte, muss er neben dem verschlüsselten Datenobjekt selbst auch alle verschlüsselten geheimen Schlüssel auf einem Pfad im Abhängigkeitsbaum entlang des Weges von seinem ihm zur Verfügung stehenden Schlüsselpaar, d.h. von dem entsprechenden Knoten des Baums bis zum verschlüsselten Datenobjekt, entschlüsseln lassen.

Um dies durchzuführen, umfasst das Datenentschlüsselungsverfahren die Schritte der Ermittlung eines privaten Schlüssels durch Entschlüsselung des ersten Chiffrats der Sequenz von Chiffraten mit den privaten Schlüssel des Schlüsselpaars, welches dem ersten der Knoten zugeordnet ist, der Ermittlung eines nächsten privaten Schlüssels für die Entschlüsselung des nächsten Chiffrats der Sequenz von Chiffraten mit dem zuvor ermittelten privaten Schlüssel und Wiederholung dieses Schrittes so lange, bis das letzte Chiffrat der Sequenz von Chiffraten entschlüsselt wurde. Das Verfahren zur Datenentschlüsselung endet schließlich mit der Entschlüsselung des verschlüsselten Datenobjekts.

Vorzugsweise werden der Schritt der Datenentschlüsselung und die Chiffratbereitstellungsschritte von unterschiedlichen Datenverarbeitungssystemen durchgeführt. Insbesondere wird der Schritt der Datenentschlüsselung durch eine vertrauenswürdige Stelle durchgeführt. Damit erhält das Datenverarbeitungssystem, welches die Chiffrate verwaltet und bereitstellt, zu keinem Zeitpunkt Informationen über etwaige Schlüssel im Klartext, welche zur Datenentschlüsselung verwendet werden.

Damit ist eine hohe Vertraulichkeit der Datenobjekte gewährleistet, da für jeden Benutzer, dessen Datenobjekte derartig verschlüsselt im Informationssystem abgelegt sind, sichergestellt ist, dass nur er selbst die Datenobjekte entschlüsseln kann. Der Betreiber des Informationssystems, welcher die Chiffrate verwaltet, hat keinen Zugriff auf die Datenobjekte des Benutzers. Ein technischer Beschlagnahmeschutz des Informationssystems besteht darin, dass die zur Entschlüsselung der Datenobjekte benötigten Geheimisse der Benutzer zu keiner Zeit dem Betreiber des Informationssystems zugänglich sein dürfen, was zur Folge hat, dass der Betreiber des Informationssystems zu keiner Zeit die Möglichkeit hat, auf verschlüsselt gespeicherte Datenobjekte zuzugreifen. Beispielsweise ist es damit möglich, im Informationssystem die verschlüsselten Datenobjekte zusammen mit den Chiffraten abzuspeichern, ohne jedoch Gefahr zu laufen, dass auf Seite des Betreiberinformationssystems die Möglichkeit besteht, die Datenobjekte zu entschlüsseln.

Dies gilt insbesondere für den Fall, dass auf Seiten des Betreibers des Informationssystems der Versuch unternommen wird, eine rechtliche Verpflichtung zur Wahrung der Vertraulichkeit der Datenobjekte zu umgehen. Etwa könnte dies durch kriminelle Machenschaften korrupter Insider, zum Beispiel Administratoren, geschehen oder bei Diebstahl bzw. Beschlagnahmung des Rechnersystems, auf dem das Informationssystem läuft, durch staatliche Organe bei gleichzeitiger Herausgabe des Informationssystem-Quellcodes.

Im Folgenden werden Ausführungsformen der Erfindung anhand der Zeichnungen näher erläutert. Es zeigen:
- Figur 1: eine grafische Darstellung von verschiedenen Schritten, mittels welcher eine Graphstruktur in Form eines Baumes erzeugt werden kann,
- Figur 2: ein Blockdiagramm eines Datenverarbeitungssystems,
- Figur 3: eine grafische Darstellung einer zyklischen Abhängigkeit zwischen zwei bzw. drei Schlüsselpaaren,
- Figur 4: eine grafische Darstellung eines gerichteten azyklischen Graphen,
- Figur 5: zwei Abhängigkeitsbäume, vor und nach ihrer Verschmelzung zu einem gerichteten azyklischen Graphen,
- Figur 6: ein Flussdiagramm eines Verfahrens zur Speicherung von Chiffraten,
- Figur 7: ein Flussdiagramm eines Verfahrens zur Bereitstellung einer ChiffratSequenz.

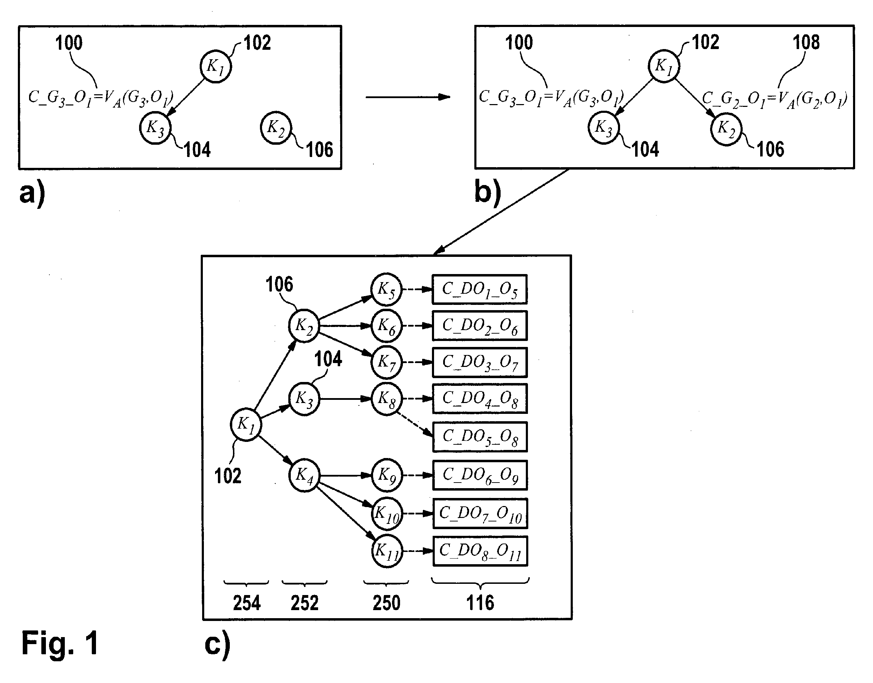

Die Figur 1 zeigt eine grafische Darstellung von verschiedenen Schritten, mittels welcher eine Graphstruktur in Form eines Baumes (Figur 1 c) erzeugt werden kann, bei welcher Datenobjekte mit Blattknoten verschlüsselt werden. In der Figur 1a ist eine Abhängigkeit zwischen zwei asymmetrischen kryptografischen Schlüsselpaaren K₁ und K₃ gezeigt, wobei das Schlüsselpaar K₁ durch den Knoten 102 repräsentiert wird und das Schlüsselpaar K₃ durch den Knoten 104 repräsentiert wird. Eine Verknüpfung der beiden Schlüsselpaare wird dadurch hergestellt, dass der geheime Schlüssel G₃ des zweiten Schlüsselpaars K₃ mit dem öffentlichen Schlüssel O₁ des ersten Schlüsselpaars K₁ verschlüsselt wird. Dies ergibt das Chiffrat 100.

Um nun zusätzlich ein Schlüsselpaar K₂, repräsentiert durch den Knoten 106, zum Graphen hinzuzufügen, erfolgt in der Figur 1b ein weiterer Verschlüsselungsvorgang, bei welchem der geheime Schlüssel G₂ des Schlüsselpaars K₂ mit dem öffentlichen Schlüssel O₁ des ersten Schlüsselpaars K₁ verschlüsselt wird, woraus sich das Chiffrat 108 ergibt.

Diese Schritte können nun fortgeführt werden, indem eine beliebige Anzahl weiterer Schlüsselpaare dem Graphen der Figur 1b hinzugefügt werden, und entsprechende Chiffrate berechnet und gespeichert werden. So wurde in der Figur 1c schließlich noch ausgehend vom Schlüsselpaar K₁ ein weiteres Schlüsselpaar K₄ hinzugefügt und eine entsprechende Abhängigkeit hergestellt.

Während die Figur 1a eine "1:1-Abhängigkeit" von K₁ nach K₃ zeigt, ist in der Figur 1b eine weitere 1:1-Abhängigkeit von K₁ nach K₂ gezeigt, die also besagt, dass ein Benutzer, der im Besitz des geheimen Schlüssels G₁ von K₁ ist, nicht nur Zugriff auf den geheimen Schlüssel G₃ von K₃ hat, sondern auch den geheimen Schlüssel G₂ von K₂.

Da bei diesem Szenario durch Zugriff auf den geheimen Schlüssel eines einzelnen Schlüsselpaars Zugriff auf die geheimen Schlüssel mehrerer Schlüsselpaare erlangt wird, wird diese Abhängigkeit im Folgenden als "1:N-Abhängigkeit" bezeichnet. Die einfachste Form einer solchen 1:N-Abhängigkeit ist in der Figur 1b gezeigt.

Eine weitere Variationsmöglichkeit bietet sich in der Hinzunahme eines weiteren Schlüsselpaars in der Art und Weise, wie dies in der Figur 1c hinsichtlich der Schlüsselpaare K₃ und K₈ gezeigt ist. Hier wird der geheime Schlüssel G₈ von K₈ mit dem öffentlichen Schlüssel O₃ von K₃ verschlüsselt und das entsprechende Chiffrat gespeichert. Damit kommt zu der bereits existierenden 1:1-Abhängigkeit von K₁ nach K₃ eine weitere 1:1-Abhängigkeit von K₃ nach K₈ hinzu. Das bedeutet, ein Benutzer, der in Besitz des geheimen Schlüssels G₁ von K₁ ist, aufgrund der Speicherung des entsprechenden Chiffrats C_G₃_O₁ Zugriff auf den geheimen Schlüssel G₃ von K₃ bekommt und dadurch wiederum, aufgrund der Speicherung von C_G₈_O₃ Zugriff auf den geheimen Schlüssel G₈ von K₈. Die 1:1-Abhängigkeiten wirken also transitiv, d.h. falls eine 1:1-Abhängigkeit von K₁ nach K₃ und weiterhin eine 1:1-Abhängigkeit von K₃ nach K₈ besteht, dann besteht auch eine 1:1-Abhängigkeit von K₁ nach K₈. Diese transitive Abhängigkeit wird auch 2-stufige Abhängigkeitshierarchie genannt.

Der oben beschriebenen 2-stufigen Abhängigkeitshierarchie, bestehend aus 3 Schlüsselpaaren, lassen sich nun beliebig viele weitere Schlüsselpaare hinzufügen, sowie eine entsprechende Menge von öffentlich gespeicherten Chiffraten, bei denen jeweils der geheime Schlüssel des Nachfolgerschlüsselpaars mit dem öffentlichen Schlüssel des Vorgängerschlüsselpaars verschlüsselt worden ist und so jeweils eine 1:1-Abhängigkeit von Vorgängerschlüsselpaar zu Nachfolgerschlüsselpaar besteht.

Nach dem oben beschriebenen Prinzip der Transitivität von verketteten 1:1-Abhängigkeiten gilt nun, dass ein Benutzer, der in Besitz des geheimen Schlüssels *G₁* von *K₁* ist, gleichsam Zugriff auf alle geheimen Schlüssel *G₃, G₈, ...,* in der vorliegenden *n*-stufigen Abhängigkeitshierarchie hat oder genauer, dass ein Benutzer, der in Besitz eines der geheimen Schlüssel *Gᵢ* ∈ {*G₁, G₈,* ... } ist, gleichsam Zugriff auf alle in der Abhängigkeitshierarchie nachfolgenden geheimen Schlüssel dieser Menge hat.

Die sich in Figur 1c ergebenden Abhängigkeitshierarchien in Form eines Baumes kann definiert werden als eine Abhängigkeits-hierarchie *H= (K,* C), für welche die folgenden zwei Bedingungen erfüllt sind:
- Für alle Schlüsselpaare *Kᵢ* ∈ *K* gilt, bis auf ein einziges Schlüsselpaar *Kₖ* ∈ *K,* dass *Kᵢ* immer nur von genau einem *Kⱼ* ∈ *K* mit *i*≠*j* abhängig ist.
- Es gibt genau ein Schlüsselpaar *Kₖ* ∈ *K,* welches von keinem *K₁* ∈ *K* mit *k*≠*l* abhängig ist.

Es soll nun beschrieben werden, wie ein Graph, wie zum Beispiel der Graph in der Figur 1c, zur Rechteverwaltung in einem Informationssystem eingesetzt werden kann. Dabei wird ein Informationssystem betrachtet, in dem verschiedene Benutzer Datenobjekte verschlüsselt abspeichern und wieder abrufen können und das außerdem einen technischen Beschlagnahmeschutz bietet.

Auch hier soll dem Informationssystem für jeden Benutzer *B* eine Hierarchie von voneinander abhängigen Schlüsselpaaren *H=* (*K, C*) = ({*K₀, K₁,* ... , *Kₙ*}*,* {*C₁,* ... , *Cₙ*}) hinzugefügt werden.

Darüber hinaus wird dem Szenario eine weitere Komponente hinzugefügt, die im Folgenden als "Vertrauenswürdige Stelle" bezeichnet werden soll. Sie kann zwischen der Benutzerseite und der Seite des Informationssystems platziert werden und erfüllt dort die Funktion, dass alle Ver- und Entschlüsselungsvorgänge innerhalb ihres Bereichs durchgeführt werden und von der Seite des Informationssystems getrennt werden können. Alle Schlüssel, die innerhalb ihres Bereichs in nicht verschlüsselter Form vorliegen, gelangen zu keiner Zeit außerhalb ihres Bereichs. Sie bekommt als Eingabe Schlüssel und Datenobjekte im Klartext von der Benutzerseite und in verschlüsselter Form von der Seite des Informationssystems und gibt als Ausgabe lediglich entschlüsselte Datenobjekte an die Benutzerseite sowie verschlüsselte Schlüssel sowie verschlüsselte Datenobjekte ans Informationssystem aus.

Darüber hinaus sollen im Informationssystem die Datenobjekte der jeweiligen Benutzer mit unterschiedlichen Schlüsselpaaren, die jeweils aus der untersten Ebene des Abhängigkeitsbaumes stammen, sozusagen die "Blätter" der baumförmigen Abhängigkeitshierarchien verschlüsselt werden. Dabei kann auch mehr als ein Datenobjekt mit demselben Schlüsselpaar in der vertrauenswürdigen Stelle verschlüsselt worden sein. Abb. 1c) stellt den Baum inklusive der verschlüsselten Datenobjekte 116 beispielhaft dar.

Wenn ein Benutzer eines seiner Datenobjekte abrufen und entschlüsseln möchte, muss er neben dem verschlüsselten Datenobjekt selbst auch alle verschlüsselten geheimen Schlüsselpaare auf dem Pfad im Abhängigkeitsbaum entlang des Weges von der Wurzel des Baums bis zum verschlüsselten Datenobjekt in die vertrauenswürdige Stelle laden lassen. Dies sei durch das folgende Beispiel illustriert, das in Abb. 1 c) grafisch dargestellt wird: Wenn ein Benutzer das verschlüsselte Datenobjekt *DO₄* abrufen und entschlüsseln lassen möchte, dann muss er dazu neben dem Datenobjekt selbst in seiner verschlüsselten Form *C_DO₄_O₈* auch die verschlüsselten geheimen Schlüssel *C_G₈_O₃* und *C_G₃_O₁* abrufen und in die vertrauenswürdige Stelle laden lassen, da er selbst nur über den geheimen Schlüssel *G₁* des Schlüsselpaars *K₁* verfügt, die vertrauenswürdige Stelle zur Entschlüsselung von *C_DO₄_O₈* aber den geheimen Schlüssel *G₈* des Schlüsselpaars *K₈* benötigt. Mit *G₁* entschlüsselt die vertrauenswürdige Stelle aus dem Chiffrat *C_G₃_O₁* den geheimen Schlüssel *G₃* von *K₃* und damit wiederum den geheimen Schlüssel *G₈* von *K₈* aus dem Chiffrat *C_G₈_O₃,* mit dem sie dann schließlich das verschlüsselte Datenobjekt *C_DO₄_O₈* entschlüsseln kann, welches sie dem Benutzer schließlich im Klartext ausgibt.

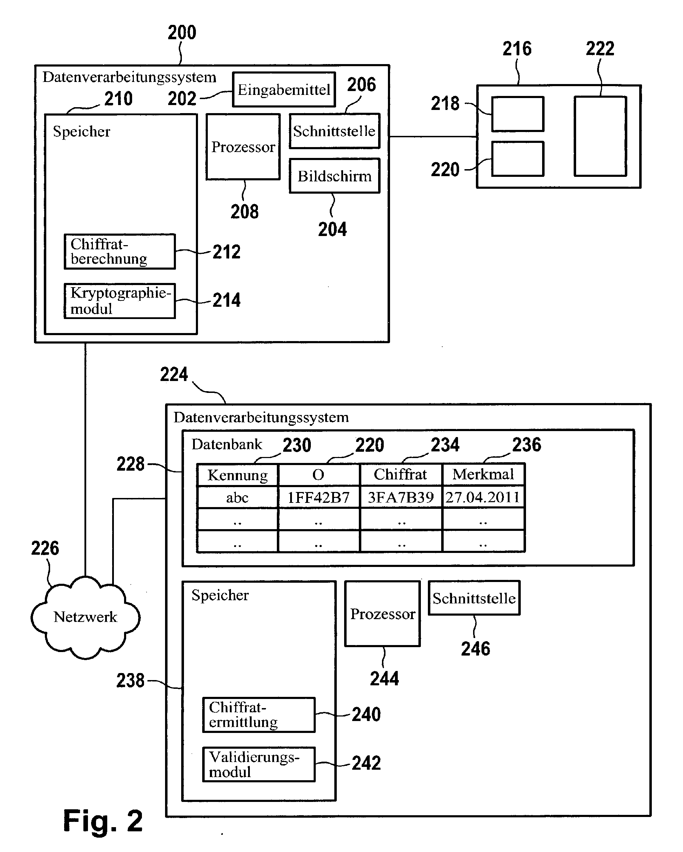

Die Figur 2 zeigt eine schematische Ansicht zweier Datenverarbeitungssysteme 200 und 224, welche zur Verwendung von Graphen für Ver- und Entschlüsselungsvorgänge und zur Erzeugung entsprechender Graphen, d.h. der Herstellung von Verknüpfungen zwischen verschiedenen Sätzen von Schlüsselpaaren, vorgesehen sind. So dient beispielsweise das Datenverarbeitungssystem 200 einer Berechnung von Chiffraten sowie der Durchführung von Ver- und Entschlüsselungsvorgängen von Daten, wohingegen das Datenverarbeitungssystem 224 einer Datenspeicherung und der Ermittlung von Chiffratsequenzen dient.

Das Datenverarbeitungssystem 200 weist Eingabemittel 202, wie beispielsweise eine Tastatur, eine Maus, sowie Eingabemittel auf, welche zum Empfang von biometrischen Merkmalen, wie Fingerabdrücken, geeignet sind. Ferner weist das Datenverarbeitungssystem einen Bildschirm 204 auf sowie eine Schnittstelle 206, mittels welcher das Datenverarbeitungssystem mit externen Geräten, wie beispielsweise einer Chipkarte 216 und einem Netzwerk 226 und damit dem Datenverarbeitungssystem 224 kommunizieren kann.

Mittels eines Prozessors 208 ist das Datenverarbeitungssystem 200 dazu in der Lage, entsprechende Computerprogramminstruktionen 212 und 214 auszuführen, welche im Speicher 210 des Datenverarbeitungssystems enthalten sind. Bei den Instruktionen 212 und 214 handelt es sich beispielsweise um ein Modul 212 zur Berechnung von Chiffraten und ein Modul 214 zur Durchführung von Kryptografievorgängen, wie beispielsweise Ver- und Entschlüsselungsvorgängen, von Daten.

Das Datenverarbeitungssystem 224 weist neben einer Schnittstelle 246, welche zur Kommunikation über das Netzwerk 226 mit dem Datenverarbeitungssystem 200 ausgebildet ist, einen Prozessor 244 auf, welcher ebenfalls in der Lage ist, entsprechende Programminstruktionen durchzuführen, welche im Speicher 238 des Datenverarbeitungssystems 224 enthalten. Bei diesen Programminstruktionen kann es sich beispielsweise um Programmmodule handeln, wie zum Beispiel ein Programmmodul 240 zur Ermittlung einer Sequenz von Chiffraten, und ein Programmmodul 242 zur Validierung der Gültigkeit eines entsprechenden Chiffrats.

Ferner weist das Datenverarbeitungssystem 224 eine Datenbank 228 auf, deren Zweck anhand eines Beispiels im Folgenden näher erläutert wird:
Zunächst sei davon ausgegangen, dass zur Durchführung von Ver- und Entschlüsselungsvorgängen eine Graphstruktur in der Datenbank 228 abgebildet ist, welche im Wesentlichen die Graphstruktur der Figur 1c widerspiegelt. In diesem Fall ist jedem Knoten der Figur 1c eine entsprechende Kennung 230 zugeordnet, mittels welcher eine Knotenidentifizierung möglich ist. Ein Benutzer hat ein Schlüsselpaar K₃, welchem eine Kennung 230 "abc" zugeordnet ist. Das Schlüsselpaar K₃ besteht aus einem privaten Schlüssel 218 und einem öffentlichen Schlüssel 220. Der private Schlüssel 218 ist auf einer Chipkarte 216 des Benutzers abgespeichert. Der öffentliche Schlüssel 220 ist ebenfalls auf der Chipkarte 216, als auch in der Datenbank 228, zusammen mit der Kennung 230 verknüpft abgespeichert. Die Abspeicherung des öffentlichen Schlüssels 220 in der Datenbank 228 verletzt dabei kein Geheimnis, da ein beliebiger Benutzer unter Kenntnis des öffentlichen Schlüssels 220 lediglich einen weiteren Verschlüsselungsvorgang von Daten durchführen kann, eine Datenentschlüsselung hingegen mit dem öffentlichen Schlüssel 220 nicht möglich ist.

Außerdem ist die Speicherung des öffentlichen Schlüssels 220 in der Datenbank 228 insbesondere dann von Vorteil, wenn mittels dieses öffentlichen Schlüssels 220 beispielsweise eine Signaturverifizierung durchgeführt werden soll. Eine Signierung eines Datenobjekts wird durchgeführt, indem ein Benutzer beispielsweise den HASH-Wert des Datenobjekts mit seinem geheimen Schlüssel signiert. Daraufhin ist jeder befugte Benutzer, welcher Zugriff auf die Datenbank 228 hat, in der Lage, mittels des öffentlichen Schlüssels 220 eine Verifikation dieses HASH-Wertes vorzunehmen, um somit zu überprüfen, ob das ihm vorliegende Datenobjekt jenes Datenobjekt ist, welches zuvor vom Benutzer signiert wurde.

Im Folgenden sei angenommen, dass ein Benutzer einen Entschlüsselungsvorgang des Datenobjektes 4 (*DO₄*) vornehmen will. Dieses Datenobjekt 4 kann dabei in der Datenbank 228 abgelegt sein, oder es ist möglich, das Datenobjekt 4 im Speicher 238 abzulegen oder in einer beliebigen externen Datenbank zu speichern. Um nun einen Entschlüsselungsvorgang durchzuführen, benötigt der entsprechende Benutzer den geheimen Schlüssel G₈, da das Datenobjekt 4 mit dem öffentlichen Schlüssel O₈ verschlüsselt gespeichert wurde. Zu diesem Zweck gibt der Benutzer in das Datenverarbeitungssystem 200 ein, dass er im Besitz des Schlüsselpaars K₃ ist und Zugriff auf den geheimen Schlüssel G₈ haben möchte. Daraufhin werden die entsprechenden Kennungen 230 des Schlüsselpaars *K₃* und *K₈* an das Datenverarbeitungssystem 224 übermittelt. Das Datenverarbeitungssystem 224 überprüft daraufhin zunächst mittels des Validierungsmoduls 242, ob ein entsprechender Bereitstellungsvorgang des Chiffrats *C*_*G₈_O₃* überhaupt zulässig ist. Zu diesem Zweck erfolgt ein Zugriff auf die Datenbank 228, in welcher neben Kennungen 230 und öffentlichen Schlüsseln, wie dem öffentlichen Schlüssel 220 von K₈, auch Chiffrate 234 und deren Klassifizierungsmerkmale 236 abgespeichert sind. Beispielsweise kann mit der Kennung bezüglich des Schlüsselpaares K₈ ein Merkmal 236 in Form eines Datums gespeichert sein, welches ein Verfallsdatum des Schlüsselpaars K₈ wiedergibt. In der Figur 2 ist hinsichtlich der Kennung "abc" und damit dem Schlüsselpaar K₈ ein Verfallsdatum 27. April 2011 angegeben. Ist als das Systemdatum des Datenverarbeitungssystems 224 älter als der 27. April 2011, so wird das Datenverarbeitungssystem 224 ein entsprechendes Chiffrat, welches eine Entschlüsselung von K₈ zulässt, nicht mehr an das Datenverarbeitungssystem 200 übermitteln.

Im Folgenden sei davon ausgegangen, dass das Schlüsselpaar K₈ und damit das entsprechende Chiffrat kein Klassifizierungsmerkmal aufweist, woraufhin das Datenverarbeitungssystem 224 mit der Ermittlung des bzw. der Chiffrate beginnt, welche die Schlüssel K₈ und K₃ miteinander verknüpfen. Dies erfolgt durch Ausführung des Moduls 240. Im einfachen Fall der Schlüsselpaare K₃ und K₈ ergibt sich als Ergebnis lediglich ein Chiffrat, nämlich das Chiffrat C_G₈_O₃, welches daraufhin über das Netzwerk 226 an das Datenverarbeitungssystem 200 übermittelt wird. Das Datenverarbeitungssystem 200 ist dabei eine vertrauenswürdige Stelle, wie zum Beispiel eine Zertifizierungsstelle oder ein Trust-Centre. Handelt es sich bei den betrachteten Datenobjekten um medizinische Datenobjekte, so handelt es sich bei der vertrauenswürdigen Stelle beispielsweise um das Arztinformationssystem einer Arztpraxis oder eines Krankenhauses oder Apothekeninformationssystem. Auch kann es sich bei der vertrauenswürdigen Stelle allgemein um ein Datenverarbeitungssystem eines Gesundheitsdienstleisters handeln, welcher in der Lage sein soll, auf seinem Bildschirm nach Einverständnis des Benutzers entsprechende medizinische Datenobjekte wie Krankenakten, medizinische Bilddaten, Rezepte oder Ähnliches, anzeigen zu lassen.

Auch kann es sich nach einer Ausführungsform der Erfindung bei dem Datenverarbeitungssystem 200 um ein Datenverarbeitungssystem, das auf einem separaten gesicherten Hardwaremodul abläuft, handeln. Hierbei kann zum Beispiel ein Trusted Platform Module (TPM) zum Einsatz kommen.

Nachdem nun also das entsprechende, die Schlüsselpaare K₈ und K₃ verknüpfende Chiffrat über das Netzwerk 226 eines Datenverarbeitungssystems 200 übermittelt wurde, kann daraufhin das Kryptografiemodul 214 zunächst eine Entschlüsselung des Chiffrats mittels des privaten Schlüssels 218 der Chipkarte 216 vornehmen. Ein solcher Entschlüsselungsvorgang kann entweder auf dem Datenverarbeitungssystem 200 selbst stattfinden, oder aber der Prozessor 222 der Chipkarte 216 kann den Entschlüsselungsvorgang des Chiffrats durchführen, was den Vorteil hat, dass der geheime Schlüssel 218 die Chipkarte 216 nicht verlässt.

Nach Entschlüsselung des Chiffrats 234 und damit Erhalt des geheimen Schlüssels *G₈* kann daraufhin eine Entschlüsselung des Datenobjektes 4 (*DO₄*) stattfinden.

Im Folgenden sei nun eine Vorgehensweise zur Berechnung von Chiffraten vorgestellt. Hierbei wird davon ausgegangen, dass ein Graph, wie in der Figur 1a gezeigt, vorliegt. Dieser Graph der Figur 1a, bestehend aus den Schlüsselpaaren K₁ und K₃, soll durch Hinzufügen eines weiteren Schlüsselpaars K₂ vervollständigt werden. Zu diesem Zweck wird zunächst das Schlüsselpaar K₂ in das Datenverarbeitungssystem 200 geladen. Daraufhin wird im Datenverarbeitungssystem 200 mittels des Moduls 212 ein Chiffrat berechnet, indem der geheime Schlüssel G₂ des Schlüsselpaars K₂ mit dem öffentlichen Schlüssel O₁ des Schlüsselpaars K₁ verschlüsselt wird. Dieser Verschlüsselungsvorgang findet vorzugsweise im Datenverarbeitungssystem 200 statt, kann jedoch mittels entsprechender Module auf einer Chipkarte stattfinden, auf welcher sich das Schlüsselpaar K₁ befindet. Nach Erzeugung des Chiffrats, d.h. des Chiffrats *C*_*G₂_O₁* wird dieses Chiffrat zusammen mit einer entsprechenden Kennung an das Datenverarbeitungssystem 224 übermittelt, wo es gegebenenfalls zusammen mit einem Klassifizierungsmerkmal 236 gespeichert wird.

In der Figur 1c ist ein gerichteter azyklischer Graph in Form eines Baumes gezeigt, bei dem Datenobjekte nur mit Blattknoten verschlüsselt werden. Die Anwendung einer solchen hierarchischen Gruppierung und Verteilung von Schlüsselpaaren Kᵢ lässt sich vorteilhaft anhand der hierarchisch aufgebauten Managementstruktur in einem Unternehmen und den daraus erwachsenden Kommunikationsanforderungen beispielhaft erläutern. Beispielsweise sind hierfür der Hierarchieebene 254 mit dem Schlüsselpaar K₁ die Kommunikationsteilnehmer "Management" zugeordnet. Die Kommunikationsteilnehmer der Gruppe Management sollen in der Lage sein, auf alle verschlüsselten Daten 116 des Unternehmens zuzugreifen. Das Schlüsselpaar K₁ ermöglicht dies, da alle anderen Schlüssel K₂ bis K₁₁ über entsprechende Chiffrate unter Verwendung des Schlüsselpaars K₁ erhalten werden können.

In der Hierarchieebene 252 mit den Schlüsselpaaren K₂, K₃ und K₄ können nun verschiedene Bereiche des Unternehmens abgebildet sein. Beispielsweise sind die Schlüsselpaare K₂, K₃ und K₄ verschiedenen Bereichsleitern zugeordnet. Jeder Bereich ist wiederum in verschiedene Abteilungen untergliedert, welche die Hierarchieebene 250 einnehmen. Die Abteilungen haben jeweils Schlüssel K₅, K₆, K₇ usw. bis K₁₁. Während jede Abteilung der Hierarchieebene 250 nur auf die direkt von ihr verschlüsselten Datenobjekte zugreifen kann, ist es den Bereichsleitern möglich, auf die Daten zuzugreifen, welche durch die untergeordneten Abteilungen erstellt und verschlüsselt worden sind. So kann beispielsweise mittels des Schlüsselpaars K₂ ein Zugriff auf alle Datenobjekte erfolgen, welche von Abteilungen mit den Schlüsselpaaren K₅, K₆ und K₇ verschlüsselt wurden. Das Management, welches hingegen im Besitz des Schlüsselpaars K₁ ist, ist in der Lage, auf sämtliche verschlüsselten Datenobjekte 116 zuzugreifen.

Hinsichtlich der Figur 2 sei noch angemerkt, dass insbesondere dadurch sichergestellt werden kann, dass es sich bei dem Datenverarbeitungssystem 200 um eine vertrauenswürdige Stelle handelt, wenn ein entsprechender Authentisierungsvorgang des Datenverarbeitungssystems 200 gegenüber dem Datenverarbeitungssystem 224 stattfinden. Damit lässt das Datenverarbeitungssystem 224 einen Zugriff auf die Datenbank 228 nur zu, wenn zum einen eine entsprechende Authentisierung erfolgt ist und zum anderen die Merkmale 236 einen Zugriff auf die jeweiligen Chiffrate zulassen.

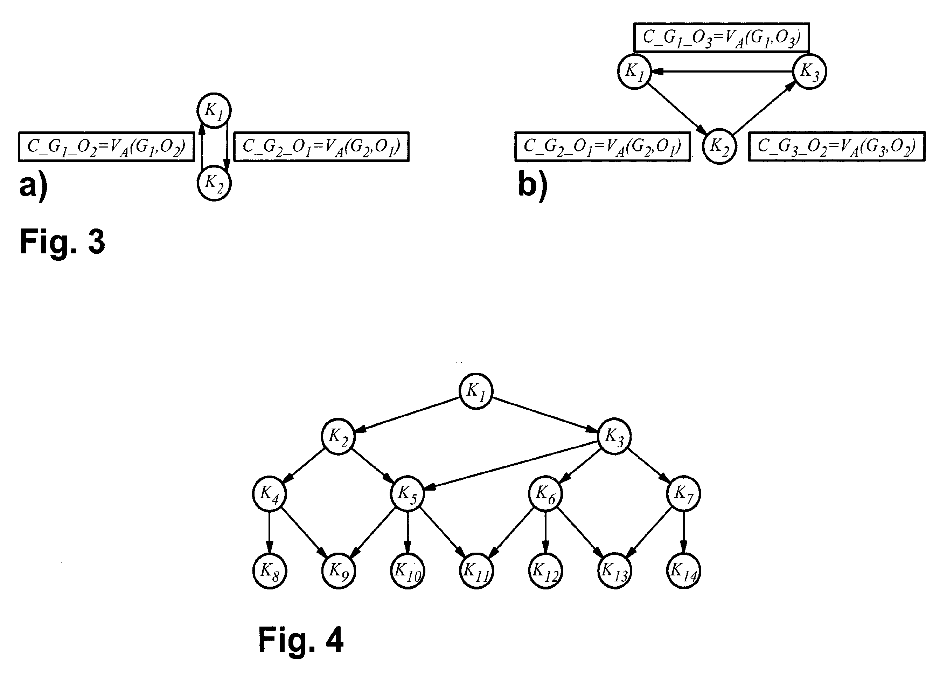

Die Figuren 3a und 3b zeigen eine grafische Darstellung einer zyklischen Abhängigkeit zwischen zwei bzw. drei Schlüsselpaaren. In diesem Fall bilden Abhängigkeitshierarchien keine Kette, sondern einen Ring von 1:1-Abhängigkeiten.

Dies stellt sich so dar, dass zu einer Menge *K₁,* ... , *Kₙ* von Schlüsselpaaren für alle i ∈□{*2*, ... , *n*} jeweils *C_Gᵢ_Oᵢ₋₁,* also der geheime Schlüssel *Gᵢ* des Schlüsselpaars *Kᵢ,* verschlüsselt mit dem öffentlichen Schlüssel *Oᵢ₋₁* des Schlüsselpaars *Kᵢ₋₁* gespeichert wird, zusätzlich dazu aber auch *C_G₁_Oₙ,* der geheime Schlüssel *G₁* von *K₁,* verschlüsselt mit dem öffentlichen Schlüssel *Oₙ* von *Kₙ.*

Besitzt ein Benutzer nun den geheimen Schlüssel *Gᵢ* des Schlüsselpaars *Kᵢ* für ein beliebiges *i* aus {*1*, ... , *n*}, so hat er wie bereits im Detail erwähnt Zugriff auf die geheimen Schlüssel *G*_{*i*+}*₁,* ..., *Gₙ* der Schlüsselpaare *K*_{*i*+}*₁,* ..., *Kₙ*; darüber hinaus hat er aber aufgrund von *C_G₁_Oₙ* auch Zugriff auf den geheimen Schlüssel *G₁* des Schlüsselpaars *K₁,* und damit auch auf die geheimen Schlüssel *G₂*, *..., Gᵢ₋₁* der Schlüsselpaare *K₂*, *..., Kᵢ₋₁,* also auf alle geheimen Schlüssel der gesamten betrachteten Abhängigkeitshierarchie.

Bei einer zyklischen Abhängigkeitshierarchie hat also jeder Benutzer, der im Besitz des geheimen Schlüssels eines der Schlüsselpaare aus der Abhängigkeitshierarchie ist, Zugriff auf alle anderen geheimen Schlüssel der Hierarchie, wobei egal ist, welchen geheimen Schlüssel der Benutzer besitzt. Die Figuren 3a und 3b zeigen grafischen Darstellungen zweier zyklischen Abhängigkeiten bei einer Menge von 2 bzw. 3 Schlüsselpaaren in der jeweiligen Abhängigkeitshierarchie.

Es sei angemerkt, dass unter einer streng theoretischen Betrachtungsweise ein Zyklus in einer Abhängigkeitshierarchie durch einen einzigen Knoten ersetzt werden kann, auf den die Benutzer einer Gruppe dann beispielsweise über eine N:1-Abhängigkeitshierarchie zugreifen können.

Die Figur 4 zeigt eine grafische Darstellung eines gerichteten azyklischen Graphen. Im Vergleich zu Bäumen entscheidend in der Figur ist nun, dass z.B. zwischen dem Schlüsselpaar K₃ und dem Schlüsselpaar K₅ eine zusätzliche Abhängigkeit durch ein entsprechendes Chiffrat erzeugt wurde. Beispielsweise kann die Hinzufügung dieser Abhängigkeit zwischen K₃ und K₅ die Ursache haben, dass dem Benutzer des Schlüsselpaars K₃ einmalig die Gelegenheit gegeben werden soll, auf Datenobjekte zuzugreifen, welche unter Verwendung der Schlüsselpaare K₉ und K₁₀ verschlüsselt wurden. Somit handelt es sich bei dieser Verknüpfung zwischen den Schlüsselpaaren K₃ und K₅ um eine "Einmal-Verknüpfung", sodass ein entsprechendes Chiffrat nur einmal verwendet werden kann, was etwa TAN-Systemen gleichkommt, die beim Online-Banking verwendet werden. Damit lässt sich erzwingen, dass ein entsprechendes Chiffrat nur für eine Sitzung verwendet werden kann. Sobald eine einmalige Verwendung dieses Chiffrates erfolgt ist, wird das entsprechende Chiffrat als "benutzt" in der Datenbank des Informationssystems gekennzeichnet und vorzugsweise aus dem Informationssystem gelöscht, sodass der Benutzer von K₃ ein zweites Mal auf die Schlüsselpaare K₉ und K₁₀ nicht mehr zugreifen kann.

Ferner ist in der Figur 4 gezeigt, dass das Schlüsselpaar K₁₁ beispielsweise von zwei Schlüsselpaaren K₅ und K₆ abhängig ist. In anderen Worten ist mit dem Schlüsselpaar K₁₁ sowohl das Schlüsselpaar K₅ als auch das Schlüsselpaar K₆ über entsprechende Chiffrate verknüpft. Sind Daten damit mit dem öffentlichen Schlüssel O₁₁ des Schlüsselpaars K₁₁ verschlüsselt, so ist ein Zugriff sowohl über K₅ als auch über K₆ möglich.

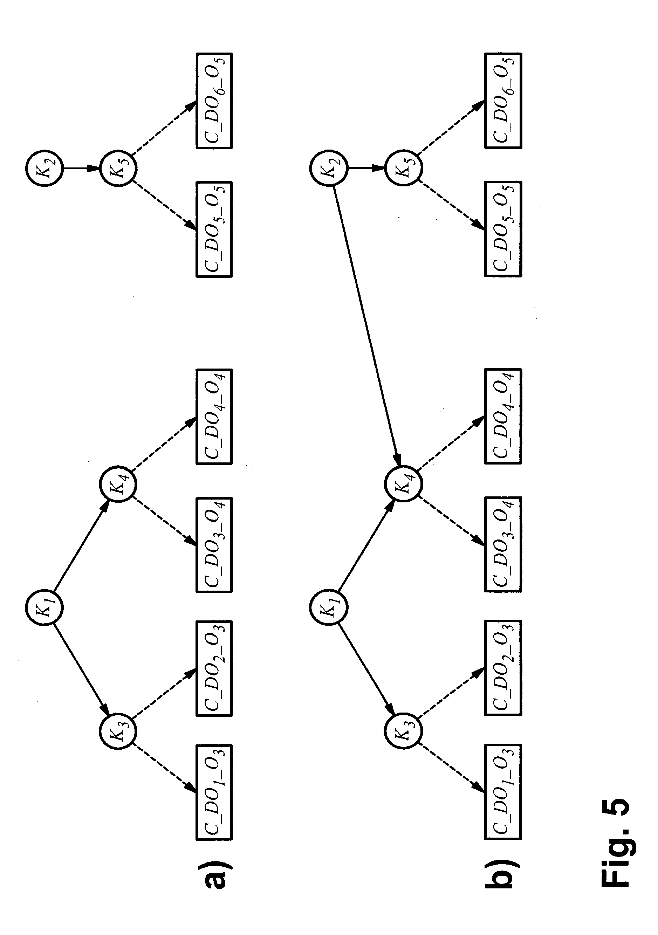

Ein konkreter Anwendungsfall einer solchen Abhängigkeit eines Schlüsselpaars über zwei verschiedene Chiffrate ist im Näheren in den Figuren 5a und b erläutert. Die Figuren 5a und b zeigen zwei Abhängigkeitsbäume, vor und nach ihrer Verschmelzung zu einem gerichteten azyklischen Graphen. In der Figur 5a ist angenommen, dass verschiedene Benutzer eines Informationssystems jeweils einen eigenen Baum mit Schlüsselpaaren haben. Beispielsweise hat ein Benutzer B₁ den Baum der Figur 5a, welcher aus den Schlüsselpaaren K₁, K₃ und K₄ besteht, wohingegen der Benutzer B₂ den Baum besitzt, welcher aus den Schlüsselpaaren K₂ und K₅ besteht. Anstelle einer Menge von überschneidungsfrei nebeneinander existierenden Schlüsselpaar-Abhängigkeitsbäumen (jeder Benutzer des Informationssystems besitzt einen solchen Baum) soll nun zugelassen werden, dass sich die Abhängigkeitsbäume überschneiden, d.h. es wird zugelassen, dass zwei oder mehrere Abhängigkeitsbäume zu einem gerichteten azyklischen Graphen verschmelzen.

Dies hat zur Folge, dass sich mit Hilfe dieser gerichteten atypischen Graphen ein flexibles Rechtesystem etablieren lässt, bei dem ein Benutzer einem anderen Benutzer ausgewählte Teile seiner Datenobjekte freigeben und existierende Freigaben auch wieder entziehen kann. Dies ist im Detail in den Figuren 5a und 5b erläutert.

In diesem Beispiel werden zwei Schlüsselpaar-Abhängigkeitsbäume (Figur 5a) betrachtet: Der erste Baum, auf den der besitzende Benutzer *B₁* über das Schlüsselpaar *K₁* zugreift, weist auf der Blattebene zwei weitere Schlüsselpaare *K₃* und *K₄* auf, mit denen jeweils zwei Datenobjekte, *DO₁* und *DO₂* bzw. *DO₃* und *DO₄* verschlüsselt sind. Der zweite Baum, auf den der besitzende Benutzer *B₂* über das Schlüsselpaar *K₂* zugreift, hat auf der Blattebene lediglich ein weiteres Schlüsselpaar *K₅*, mit dem die Datenobjekte *DO₅* und *DO₆* verschlüsselt sind.

Wenn Benutzer *B₁* nun beschließen sollte, einen Teil seiner Datenobjekte für Benutzer *B₂* zugänglich zu machen, beispielsweise die Datenobjekte *DO₃* und *DO₄,* dann kann er dies dadurch tun, indem er der Schlüsselverwaltung im Informationssystem (die Menge C von verschlüsselten geheimen Schlüsseln), die zu diesem Zeitpunkt aus den Elementen *C_G₃_O₁, C_G₄_O₁* und *C_G₅_O₂* besteht, ein weiteres Element *C_G₄_O₂ = V₄(G₄, O₂)* hinzufügt, was im Graphen der Figur 5b einer zusätzlichen Verbindung vom Knoten *K₂* zum Knoten K₄ entspricht.

Dadurch sind die zwei Abhängigkeitsbäume der Figur 5a zu einem gerichteten azyklischen Graphen, wie in Figur 5b gezeigt, verschmolzen, und Benutzer *B₂* kann auf die Datenobjekte *DO₃* und *DO₄* von Benutzer *B₁* zugreifen, indem er die verschlüsselten Datenobjekte *C_DO₃_O₄* und *C_DO₄_O₄* sowie *C_G₄_O₂* in die vertrauenswürdige Stelle laden lässt, die dann erst *G₄ = E_{A}(C_G₄_O₂, G₂)* und dann *DO₃ = E_{A}(C_DO₃_O₄, G₂)* sowie *DO₄ = E_{A}(C_DO₄_O₄, G₂)* entschlüsselt.

Der Entzug einer bereits erteilten Freigabe auf Datenobjekte lässt sich in diesem Szenario ebenfalls sehr einfach realisieren, nämlich dadurch, dass der entsprechende verschlüsselte geheime Schlüssel aus der Abhängigkeitshierarchie des betreffenden Benutzers gelöscht wird. Dadurch steht der besagte Schlüssel für den Benutzer, dem die Freigabe ursprünglich erteilt worden ist, nicht mehr zur Verfügung, so dass er die bisher freigegebenen Datenobjekte von der vertrauenswürdigen Stelle nicht mehr entschlüsseln lassen kann.

An dieser Stelle wird die Funktion der zuvor eingeführten vertrauenswürdigen Stelle deutlich: Sie erfüllt den Zweck, dass Benutzer Zugriff auf für sie freigegebene Datenobjekte anderer Benutzer bekommen, ohne die zugehörigen geheimen Schlüssel zu kennen, mit denen diese Datenobjekte entschlüsselt werden, da die geheimen Schlüssel die vertrauenswürdige Stelle nicht verlassen. Wenn diese geheimen Schlüssel zu irgendeinem Zeitpunkt in den Hoheitsbereich der Benutzer geraten würden, könnte es nicht ausgeschlossen werden, dass korrupte Benutzer sich die Schlüssel "merken", d.h. sie mit Hilfe eines manipulierten Client-Programms o.ä. abspeichern. In diesem Fall wäre es möglich, dass ein Benutzer auch nach Entzug einer Freigabe Datenobjekte mit Hilfe eines irregulär "gemerkten" geheimen Schlüssel zu entschlüsseln kann, wodurch das Freigabekonzept unterlaufen werden könnte. Durch die Einführung der vertrauenswürdigen Stelle jedoch behält das Konzept der Nutzung von 1:N-Abhängigkeitshierarchien seine Nutzbarkeit.

Die Schlüssel werden daher nur in einer "vertrauenswürdigen Stelle" zur Verfügung gestellt. Unter einer "vertrauenswürdige Stelle" wird hier jedes elektronische Gerät, wie z.B. ein Computersystem, verstanden, in dem die schutzbedürftigen Datenobjekte im Klartext vorliegen und/oder in dem Daten zur Überführung der Datenobjekte in Klartext vorliegen und/oder welches Zugriff auf solche Daten hat.

Ein weiteres Konzept für eine Nutzung von Hierarchien ist dass sich mehrere Benutzer *B₁, ... , Bₙ* eines Informationssystems zu einer *Gruppe B* zusammenschließen, in der vereinbart wird, dass jeder Benutzer *Bᵢ* der Gruppe neben seinen eigenen auch die Datenobjekte aller anderen Benutzer *B₁,* ... , *Bᵢ₋₁, B*_{*i*+}*₁,* ... , *Bₙ* aus der Gruppe entschlüsseln können soll. Dazu erteilt jeder Benutzer *Bᵢ* aus *B* dem in der Reihenfolge nachfolgenden Benutzer B_{*i*+*1*} eine Freigabe auf seine eigenen Datenobjekte, indem er den geheimen Schlüssel *Gᵢ* eines seiner Schlüsselpaare *K₁* mit dem öffentlichen Schlüssel *O*_{*i*+*1*} des Schlüsselpaars *K*_{*i*+*1*} des Benutzers *B*_{*i*+*1*} verschlüsselt und das Chiffrat *C_G₁_O*_{*i*+*1*} im Informationssystem abspeichert. Außerdem verschlüsselt Benutzer *Bₙ* seinen geheimen Schlüssel *Gₙ* mit dem öffentlichen Schlüssel *O₁* des Schlüsselpaars *K₁* von Benutzer *B₁* und speichert das Chiffrat *C*_*Gₙ*_*O₁* ebenfalls im Informationssystem. In diesem Szenario ist es nun möglich, dass die vertrauenswürdige Stelle für einen Teilnehmer der Benutzergruppe *B* bei Eingabe dessen geheimen Schlüssels durch Entlanglaufen der kreisförmigen Hierarchie den geheimen Schlüssel von jedem anderen Teilnehmer nacheinander entschlüsselt und damit wiederum alle Datenobjekte, die mit jedem der zugehörigen öffentlichen Schlüssel verschlüsselt wurden, entschlüsseln kann. Jeder Teilnehmer von *B* kann also auf alle von allen anderen Teilnehmern von *B* verschlüsselten und ins Informationssystem eingestellten Datenobjekte zuzugreifen, jedoch ohne deren geheimen Schlüssel zu kennen.

Einzelne Mitglieder können in diese Hierarchie aufgenommen sowie ausgeschlossen werden; es müssen nur die entsprechenden Verbindungen gelöscht bzw. neu hinzugefügt werden. Beim Hinzufügen eines neuen Mitglieds *B*_{*n*+*1*} wird die kreisförmige Hierarchie an einer Stelle aufgetrennt, d.h. es wird beispielsweise die Verbindung *C Gₙ_O₁* gelöscht, und die Verbindungen *C_Gₙ_O*_{*n*+*1*} und *C_G*_{*n*+}*₁_O₁* hinzugefügt.

Analog dazu werden beim Löschen eines Mitglieds *Bᵢ* aus der Hierarchie die Verbindungen *C_Gᵢ₋₁_Oᵢ* und *C_Gᵢ_O*_{*i*+*1*} aus der Hierarchie gelöscht und eine neue Verbindung *C_Gᵢ₋₁_O*_{*i*+*1*} zur Hierarchie hinzugefügt werden.

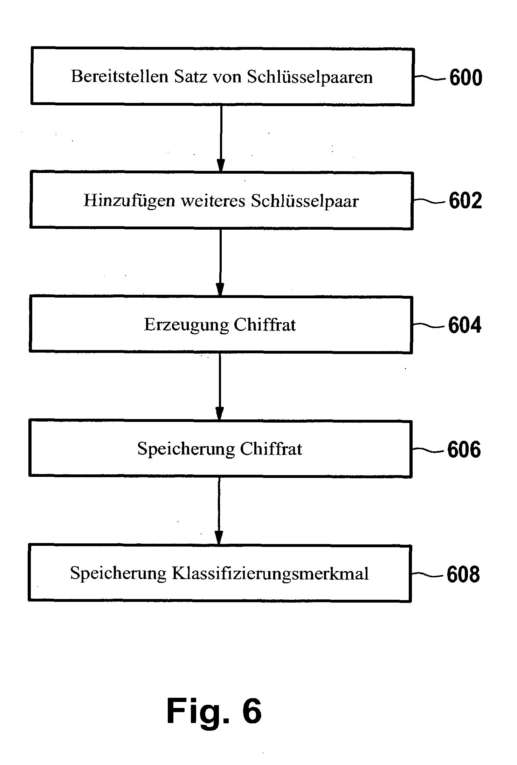

Die Figur 6 zeigt ein Flussdiagramm eines Verfahrens zur Speicherung von Chiffraten. Das Verfahren beginnt in Schritt 600, in welchem Schlüsselpaare in Form eines Graphen bereitgestellt werden. Zu diesem existierenden Satz von Schlüsselpaaren soll nun ein weiteres Schlüsselpaar hinzugefügt werden, was in Schritt 602 erfolgt. Daraufhin erfolgt die Erzeugung einer Abhängigkeit zwischen diesem weiteren Schlüsselpaar und einem entsprechenden Vorgänger-Schlüsselpaar des bereitgestellten Satzes von Schlüsselpaaren, indem in Schritt 604 ein entsprechendes Chiffrat erzeugt wird. Bei diesem Chiffrat wird dabei der geheime Schlüssel des weiteren Schlüsselpaars mit dem öffentlichen Schlüssel des Vorgänger-Schlüsselpaars verschlüsselt. Das so erzeugte Chiffrat wird in Schritt, 606 in einer entsprechenden Datenbank gespeichert. Der Schritt 608 mit der Speicherung eines Klassifizierungsmerkmals ist optional und kann dazu verwendet werden, um den Zugriff auf das Chiffrat zeitlich, nach der Benutzung oder nach Anzahl der Benutzungen einzuschränken.

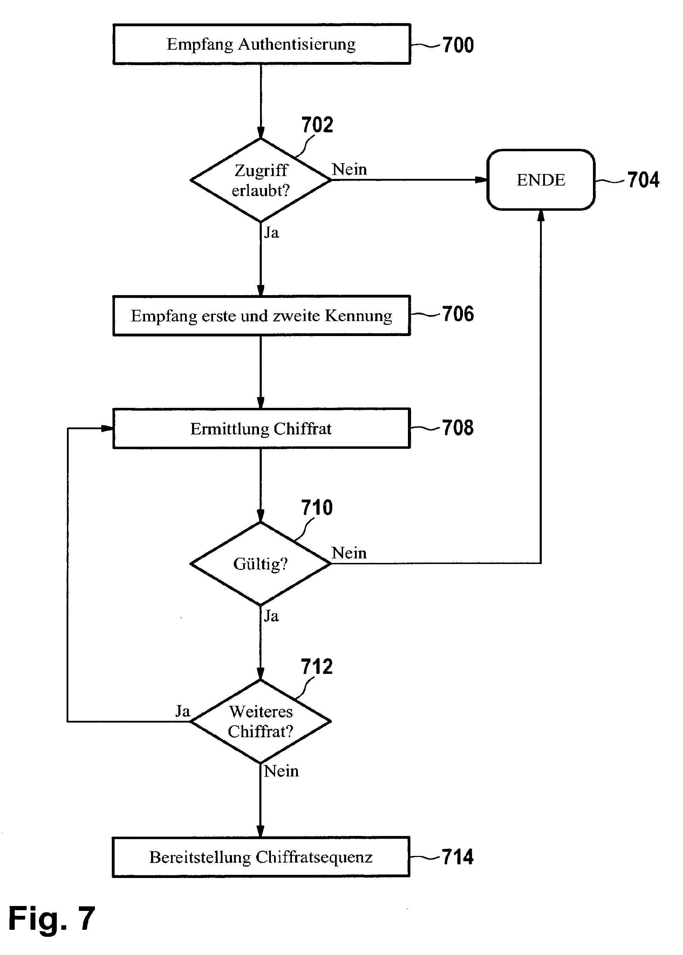

Die Figur 7 zeigt ein Flussdiagramm eines Verfahrens zur Bereitstellung einer ChiffratSequenz. Zunächst wird in Schritt 700 eine Authentisierung empfangen, mittels welcher sichergestellt wird, dass ausschließlich ein befugter Benutzer Zugriff auf die Chiffrate hat. Ergibt der Überprüfungsschritt 702, dass ein Zugriff auf ein entsprechendes Chiffrat nicht erlaubt ist, so endet das Verfahren in Schritt 704. Ist hingegen das Ergebnis des Überprüfungsschrittes 702, dass ein Zugriff auf Chiffrate erlaubt ist, so empfängt das System in Schritt 706 eine erste und zweite Kennung. Beispielsweise kennzeichnet die erste Kennung das Schlüsselpaar, welches das Schlüsselpaar ist, von welchem aus ein Entschlüsselungsvorgang von Daten stattfinden soll. Die zweite Kennung kennzeichnet entweder das zu entschlüsselnde Datenobjekt oder das letzte Schlüsselpaar in der Sequenz von Schlüsselpaaren, welches für einen Entschlüsselungsvorgang verwendet werden soll.

Daraufhin werden in den Schritten 708, 710 und 712 die Chiffrate bestimmt, welche für die entsprechende Chiffrat-Entschlüsselungssequenz auf einem Pfad der Schlüsselpaare liegen, welcher durch die erste und zweite Kennung vorgegeben ist, falls ein solcher Pfad existiert. Zur Suche eines solchen Pfads in dem Graphen können verschiedene an sich bekannte Verfahren verwendet werden, z.B. um einen kürzesten Pfad zu finden. So wird in Schritt 708 ein entsprechendes Chiffrat übermittelt und in Schritt 710 überprüft, ob das Chiffrat gültig ist. Hierbei kann es sich wie bereits oben erwähnt um eine Gültigkeit nach Zeitintervall, eine Gültigkeit nach Anzahl der Benutzungen, um eine Gültigkeit nach Art der Benutzung handeln, etc.. Ist das ermittelte Chiffrat nicht gültig, so endet das Verfahren in Schritt 704. Ist das Chiffrat gültig, so erfolgt in Schritt 712 eine Überprüfung, ob ein weiteres Chiffrat notwendig ist, d.h. ob die Sequenz an Chiffraten vollständig ist oder nicht. Ist die Sequenz noch nicht vollständig, springt das Verfahren zu Schritt 708 zurück, wohingegen im Falle der Vollständigkeit der Sequenz die Chiffratsequenz in Schritt 714 bereitgestellt wird.

## Patentansprüche

1. Verfahren zur Erzeugung eines Satzes von asymmetrischen kryptografischen Schlüsselpaaren für die Verschlüsselung von Datenobjekten, wobei der Satz von Schlüsselpaaren ein erstes Schlüsselpaar (K1) und ein zweites Schlüsselpaar (K2) aufweist, wobei das erste Schlüsselpaar durch einen ersten privaten (G1) und einen ersten öffentlichen Schlüssel (01) gebildet wird und das zweite Schlüsselpaar durch einen zweiten privaten (G2) und einen zweiten öffentlichen Schlüssel (02) gebildet wird, wobei dem ersten und zweiten Schlüsselpaar ein erstes Chiffrat (C_G2_O1) zugeordnet ist, wobei das erste Chiffrat durch eine Verschlüsselung des zweiten privaten Schlüssels (G2) mit dem ersten öffentlichen Schlüssel (01) gebildet wird, mit den folgenden Schritten:
- Hinzufügen (602) eines dritten asymmetrischen kryptografischen Schlüsselpaars (K3) zu dem Satz von Schlüsselpaaren, wobei das dritte Schlüsselpaar durch einen dritten privaten (G3) und einen dritten öffentlichen Schlüssel (03) gebildet wird,
- Erzeugung (604) eines zweiten Chiffrats (C_G3_O1) durch Verschlüsselung des dritten privaten Schlüssels (G3) mit dem ersten öffentlichen Schlüssel (01),
- Speicherung (606) des zweiten Chiffrats (234),
wobei der Satz von Schlüsselpaaren eine gerichtete Graphstruktur aufweist, wobei die Knoten des Graphs die Schlüsselpaare repräsentieren, wobei eine Abhängigkeit zwischen einem Vorgängerschlüsselpaar und einem dem Vorgängerschlüsselpaar im Graph unmittelbar nachfolgenden Nachfolgerschlüsselpaar durch ein Chiffrat gebildet wird, wobei das Chiffrat durch Verschlüsselung des privaten Schlüssels des Nachfolgerschlüsselpaars mit dem öffentlichen Schlüssel des Vorgängerschlüsselpaars gebildet ist, wobei bis auf das den Wurzelknoten des Graphs bildenden Schlüsselpaar jedes Schlüsselpaar im Graph durch mindestens ein Chiffrat von einem anderen Schlüsselpaar abhängig ist,
wobei ein erstes Datenverarbeitungssystem (200) und ein zweites Datenverarbeitungssystem (224) vorgesehen sind, die über ein Netzwerk (226) miteinander verbunden sind, wobei das erste Datenverarbeitungssystem (200) zur Berechnung der Chiffraten sowie der Durchführung von Ver- und Entschlüsselungsvorgängen der Datenobjekte dient und das zweite Datenverarbeitungssystem (224) zur Datenspeicherung und der Ermittlung von Chiffratssequenzen dient, und wobei das erste Datenverarbeitungssystem (200) eine vertrauenswürdige Stelle wie eine Zertifizierungsstelle oder ein Trust-Centre ist.

2. Verfahren nach Anspruch 1, **dadurch gekennzeichnet, dass** das Datenverarbeitungssystem (200) Eingabemittel (202), einen Bildschirm (204) und eine Schnittstelle (206) aufweist zur Kommunikation mit einem externen Gerät, insbesondere einer Chipkarte (216) und dem Netzwerk (226).

3. Verfahren nach Anspruch 1 oder 2, **dadurch gekennzeichnet, dass** das Datenverarbeitungssystem (200) ein Modul (212) zur Berechnung von Chiffraten und ein Modul (214) zur Durchführung von Kryptographievorgängen wie das Verschlüsseln und Entschlüsseln von Datenobjekten aufweist.

4. Verfahren nach einem der vorhergehenden Ansprüche, **dadurch gekennzeichnet, dass** das zweite Datenverarbeitungssystem (224) einen Prozessor (244) aufweist zur Durchführung von Programminstruktionen wie der Ermittlung einer Sequenz von Chiffraten und/oder der Validierung der Gültigkeit eines Chiffrats und eine Schnittstelle (246) zur Kommunikation mit dem Netzwerk (226).

5. Verfahren nach einem der vorhergehenden Ansprüche, **dadurch gekennzeichnet, dass** eine Chipkarte (216) mit einem Prozessor (222) vorgesehen ist, auf der ein privater Schlüssel (218) gespeichert ist, und der Prozessor (222) den Entschlüsselungsvorgang des Chiffrats durchführt.

6. Verfahren nach einem der vorhergehenden Ansprüche, wobei bis auf das den Wurzelknoten des Graphs bildenden Schlüsselpaar jedes Schlüsselpaar im Graph durch genau ein Chiffrat von einem anderen Schlüsselpaar abhängig ist.

7. Verfahren nach einem der vorigen Ansprüche, wobei der Satz von Schlüsselpaaren zwei beliebige Schlüsselpaare mit je einem privaten und einem öffentlichen Schlüssel aufweist, ferner mit den Schritten:
- Erzeugung eines vierten Chiffrats durch Verschlüsselung des privaten Schlüssels des ersten Schlüsselpaars der beliebigen Schlüsselpaare mit dem öffentlichen Schlüssel des zweiten Schlüsselpaars der beliebigen Schlüsselpaare,
- Speicherung des vierten Chiffrats.

8. Verfahren nach einem der vorigen Ansprüche, wobei zusammen mit den Chiffraten Klassifizierungsmerkmale (236) gespeichert werden, wobei die Klassifizierungsmerkmale (236) eine Gültigkeit der Chiffrate festlegen, wobei die Gültigkeit angibt, dass nach Ablauf der Gültigkeit eine Verwendung der Chiffrate für Datenverarbeitungsvorgänge verhindert werden soll.

9. Verfahren nach Anspruch 8, wobei es sich bei den Klassifizierungsmerkmalen (236) um eine Gültigkeit nach Zeitintervall und/oder eine Gültigkeit nach Anzahl der Benutzungen und/oder eine Gültigkeit nach Art der Benutzung handelt.

10. Computerprogrammprodukt mit von einem Prozessor ausführbaren Instruktionen zur Durchführung der Verfahrensschritte des Verfahrens nach einem der vorigen Ansprüche 1-9.

11. Datenverarbeitungssystem zur Erzeugung eines Satzes von asymmetrischen kryptografischen Schlüsselpaaren für die Verschlüsselung von Datenobjekten, wobei der Satz von Schlüsselpaaren ein erstes Schlüsselpaar (K1) und ein zweites Schlüsselpaar (K2) aufweist, wobei das erste Schlüsselpaar durch einen ersten privaten (G1) und einen ersten öffentlichen Schlüssel (01) gebildet wird und das zweite Schlüsselpaar durch einen zweiten privaten (G2) und einen zweiten öffentlichen Schlüssel (02) gebildet wird, wobei dem ersten und zweiten Schlüsselpaar ein erstes Chiffrat (C_G2_O1) zugeordnet ist, wobei das Chiffrat durch eine Verschlüsselung des zweiten privaten Schlüssels (G2) mit dem ersten öffentlichen Schlüssel (O1) gebildet wird, wobei das Datenverarbeitungssystem umfasst:
- Mittel (222) zum Hinzufügen eines dritten asymmetrischen kryptografischen Schlüsselpaars (K3) zu dem Satz von Schlüsselpaaren, wobei das dritte Schlüsselpaar durch einen dritten privaten (G3) und einen dritten öffentlichen Schlüssel (03) gebildet wird,
- Mittel (222) zur Erzeugung eines zweiten Chiffrats (C_G3_O1) durch Verschlüsselung des dritten privaten Schlüssels (G3) mit dem ersten öffentlichen Schlüssel (01),
- Mittel (222) zur Speicherung des zweiten Chiffrats (234) ,
wobei der Satz von Schlüsselpaaren eine gerichtete Graphstruktur aufweist, wobei die Knoten des Graphs die Schlüsselpaare repräsentieren, wobei eine Abhängigkeit zwischen einem Vorgängerschlüsselpaar und einem dem Vorgängerschlüsselpaar im Graph unmittelbar nachfolgenden Nachfolgerschlüsselpaar durch ein Chiffrat gebildet wird, wobei das Chiffrat durch Verschlüsselung des privaten Schlüssels des Nachfolgerschlüsselpaars mit dem öffentlichen Schlüssel des Vorgängerschlüsselpaars gebildet ist, wobei bis auf das den Wurzelknoten des Graphs bildenden Schlüsselpaar jedes Schlüsselpaar im Graph durch mindestens ein Chiffrat von einem anderen Schlüsselpaar abhängig ist, wobei der private Nachfolgerschlüssel von dem Datenverarbeitungssystem empfangen wird, wobei ein erstes Datenverarbeitungssystem (200) und ein zweites Datenverarbeitungssystem (224) vorgesehen sind, die über ein Netzwerk (226) miteinander verbunden sind, wobei das erste Datenverarbeitungssystem (200) zur Berechnung der Chiffraten sowie der Durchführung von Ver- und Entschlüsselungsvorgängen der Datenobjekte dient und das zweite Datenverarbeitungssystem (224) zur Datenspeicherung und der Ermittlung von Chiffratssequenzen dient, und wobei das erste Datenverarbeitungssystem (200) eine vertrauenswürdige Stelle wie eine Zertifizierungsstelle oder ein Trust-Centre ist.

12. Datenverarbeitungssystem nach Anspruch 11, **dadurch gekennzeichnet, dass** das Datenverarbeitungssystem (200) Eingabemittel (202), einen Bildschirm (204) und eine Schnittstelle (206) aufweist zur Kommunikation mit einem externen Gerät, insbesondere einer Chipkarte (216) und dem Netzwerk (226).

13. Datenverarbeitungssystem nach Anspruch 11 oder 12, **dadurch gekennzeichnet, dass** das Datenverarbeitungsmodul (200) ein Modul (212) zur Berechnung von Chiffraten und ein Modul (214) zur Durchführung von Kryptographievorgängen wie das Verschlüsseln und Entschlüsseln von Datenobjekten aufweist.

14. Datenverarbeitungssystem nach einem der vorhergehenden Ansprüche 11 - 13, **dadurch gekennzeichnet, dass** das zweite Datenverarbeitungssystem (224) einen Prozessor (244) aufweist zur Durchführung von Programminstruktionen wie der Ermittlung einer Sequenz von Chiffraten und/oder der Validierung der Gültigkeit eines Chiffrats und eine Schnittstelle (246) zur Kommunikation mit dem Netzwerk (226).

15. Datenverarbeitungssystem nach einem der vorhergehenden Ansprüche 11 - 14, **dadurch gekennzeichnet, dass** eine Chipkarte (216) mit einem Prozessor (222) vorgesehen ist, auf der ein privater Schlüssel (218) gespeichert ist, und der Prozessor (222) den Entschlüsselungsvorgang des Chiffrats durchführt.

## Claims

1. A method for generating a set of asymmetric cryptographic key pairs for the encryption of data objects, wherein the set of key pairs has a first key pair (K1) and a second key pair (K2), wherein the first key pair is formed by a first private key (G1) and a first public key (01) and the second key pair is formed by a second private key (G2) and a second public key (02), wherein the first and second key pair are assigned a first cipher (C_G2_O1), wherein the first cipher is formed by an encryption of the second private key (G2) with the first public key (01), said method comprising the following steps:
- adding (602) a third asymmetric cryptographic key pair (K3) to the set of key pairs, wherein the third key pair is formed by a third private key (G3) and a third public key (03),
- generating (604) a second cipher (C_G3_O1) by encryption of the third private key (G3) with the first public key (O1),
- storing (606) the second cipher (234),
wherein the set of key pairs has a directed graph structure, wherein the nodes of the graph represent the key pairs, wherein a relationship between a predecessor key pair and a successor key pair directly following the predecessor key pair in the graph is formed by a cipher, wherein the cipher is formed by encryption of the private key of the successor key pair with the public key of the predecessor key pair, wherein, apart from the key pair forming the root node of the graph, each key pair in the graph is dependent on another key pair by at least one cipher,
wherein a first data processing system (200) and a second data processing system (224) are provided which are interconnected via a network (226), wherein the first data processing system (200) is used to calculate the ciphers and also to carry out encryption and decryption processes of the data objects and the second data processing system (224) is used for data storage and to determine cipher sequences, and wherein the first data processing system (200) is a trusted location, such as a certification location or a trust centre.

2. The method according to Claim 1, **characterised in that** the data processing system (200) has input means (202), a screen (204), and an interface (206) for communication with an external device, in particular a chip card (216) and the network (226).

3. The method according to Claim 1 or 2, **characterised in that** the data processing system (200) has a module (212) for calculating ciphers and a module (214) for carrying out cryptography processes, such as the encryption and decryption of data objects.

4. The method according to one of the preceding claims, **characterised in that** the second data processing system (224) has a processor (244) for executing program instructions, such as determining a sequence of ciphers and/or validating the validity of a cipher, and has an interface (246) for communication with the network (226).

5. The method according to one of the preceding claims, **characterised in that** a chip card (216) is provided with a processor (222), on which a private key (218) is stored, and the processor (222) carries out the decryption process of the cipher.

6. The method according to one of the preceding claims, wherein, apart from the key pair forming the root node of the graph, each key pair in the graph is dependent on another key pair by precisely one cipher.

7. The method according to one of the preceding claims, wherein the set of key pairs has two arbitrary key pairs each with a private and a public key, said method further comprising the following steps:
- generating a fourth cipher by encryption of the private key of the first key pair of the arbitrary key pairs with the public key of the second key pair of the arbitrary key pairs,
- storing the fourth cipher.

8. The method according to one of the preceding claims, wherein, together with the ciphers, classification features (236) are stored, wherein the classification features (236) determine a validity of the ciphers, wherein the validity specifies that a use of the ciphers for data processing processes is to be prevented after expiration of the validity.

9. The method according to Claim 8, wherein the classification features (236) are a validity based on time interval and/or a validity based on number of uses and/or a validity based on type of use.

10. A computer program product comprising instructions that can be executed by a processor for carrying out the method steps of the method according to one of preceding Claims 1-9.

11. A data processing system for generating a set of asymmetric cryptographic key pairs for the encryption of data objects, wherein the set of key pairs has a first key pair (K1) and a second key pair (K2), wherein the first key pair is formed by a first private key (G1) and a first public key (01) and the second key pair is formed by a second private key (G2) and a second public key (02), wherein the first and second key pair are assigned a first cipher (C_G2_O1), wherein the cipher is formed by an encryption of the second private key (G2) with the first public key (01), said data processing system comprising:
- means (222) for adding a third asymmetric cryptographic key pair (K3) to the set of key pairs, wherein the third key pair is formed by a third private key (G3) and a third public key (03),
- means (222) for generating a second cipher (C_G3_O1) by encryption of the third private key (G3) with the first public key (01),
- means (222) for storing the second cipher (234), wherein the set of key pairs has a directed graph structure, wherein the nodes of the graph represent the key pairs, wherein a relationship between a predecessor key pair and a successor key pair directly following the predecessor key pair in the graph is formed by a cipher, wherein the cipher is formed by encryption of the private key of the successor key pair with the public key of the predecessor key pair, wherein, apart from the key pair forming the root node of the graph, each key pair in the graph is dependent on another key pair by at least one cipher, wherein the private successor key is received by the data processing system (200), wherein a first data processing system (200) and a second data processing system (224) are provided which are interconnected via a network (226), wherein the first data processing system (200) is used to calculate the ciphers and also to carry out encryption and decryption processes of the data objects and the second data processing system (224) is used for data storage and to determine cipher sequences, and wherein the first data processing system (200) is a trusted location, such as a certification location or a trust centre.

12. The data processing system according to Claim 11, **characterised in that** the data processing system (200) has input means (202), a screen (204), and an interface (206) for communication with an external device, in particular a chip card (216) and the network (226).

13. The data processing system according to Claim 11 or 12, **characterised in that** the data processing system (200) has a module (212) for calculating ciphers and a module (214) for carrying out cryptography processes, such as the encryption and decryption of data objects.

14. The data processing system according to one of preceding Claims 11-13, **characterised in that** the second data processing system (224) has a processor (244) for executing program instructions, such as determining a sequence of ciphers and/or validating the validity of a cipher, and has an interface (246) for communication with the network (226).

15. The data processing system according to one of preceding Claims 11-14, **characterised in that** a chip card (216) is provided with a processor (222), on which a private key (218) is stored, and the processor (222) carries out the decryption process of the cipher.

## Revendications

1. Procédé pour la génération d'un jeu de paires de clés cryptographiques asymétriques pour le cryptage d'objets de données, dans lequel le jeu de paires de clés comprend une première paire de clés (K1) et une deuxième paire de clés (K2), dans lequel la première paire de clés est formée par une première clé privée (G1) et une première clé publique (01) et la deuxième paire de clés est formée par une deuxième clé privée (G2) et une deuxième clé publique (02), dans lequel un premier texte chiffré (C_G2_O1) est attribué à la première et à la deuxième paire de clés, dans lequel le premier texte chiffré est formé par un cryptage de la deuxième clé privée (G2) avec la première clé publique (O1), avec les étapes suivantes :
- ajout (602) d'une troisième paire de clés cryptographiques asymétriques (K3) au jeu de paires de clés, la troisième paire de clés étant formée par une troisième clé privée (G3) et une troisième clé publique (03),
- génération (604) d'un deuxième texte chiffré (C_G3_O1) par cryptage de la troisième clé privée (G3) avec la première clé publique (01),
- enregistrement (606) du deuxième texte chiffré (234),
dans lequel le jeu de paires de clés présente une structure de graphique orientée, les noeuds du graphique représentant les paires de clés, une dépendance entre une paire de clés précédente et une paire de clés suivante immédiatement consécutive à la paire de clés précédente dans le graphique étant formée par un texte chiffré, le texte chiffré étant formé par cryptage de la clé privée de la paire de clés suivante avec la clé publique de la paire de clés précédente, chaque paire de clés dans le graphique étant dépendante d'une autre paire de clés par le biais d'au moins un texte chiffré, à l'exception de la paire de clés formant le noeud racine du graphique, dans lequel il est prévu un premier système de traitement de données (200) et un deuxième système de traitement de données (224) reliés entre eux par le biais d'un réseau (226), le premier système de traitement de données (200) étant conçu pour le calcul des textes chiffrés et pour l'exécution d'opérations de cryptage et de décryptage des objets de données, et le deuxième système de traitement de données (224) étant conçu pour le stockage de données et pour la détermination de séquences de texte chiffré, et le premier système de traitement de données (200) étant un centre fiable, tel qu'un centre de certification ou un trust-center.

2. Procédé selon la revendication 1, **caractérisé en ce que** le système de traitement de données (200) comprend des moyens d'entrée (202), un écran (204) et une interface (206) pour la communication avec un appareil externe, en particulier une carte à puce (216) et un réseau (226).

3. Procédé selon la revendication 1 ou 2, **caractérisé en ce que** le système de traitement de données (200) présente un module (212) pour le calcul de textes chiffrés et un module (214) pour l'exécution d'opérations cryptographiques tels que le cryptage et le décryptage d'objets de données.

4. Procédé selon l'une des revendications précédentes, **caractérisé en ce que** le deuxième système de traitement de données (224) comprend un processeur (244) pour l'exécution d'instructions de programme, telles que la détermination d'une séquence de textes chiffrés et/ou la validation de la validité d'un texte chiffré, et une interface (246) pour la communication avec le réseau (226).

5. Procédé selon l'une des revendications précédentes, **caractérisé en ce qu'**il est prévu une carte à puce (216) avec un processeur (222), sur laquelle est stockée une clé privée (218), le processeur (222) exécutant l'opération de décryptage du texte chiffré.

6. Procédé selon l'une des revendications précédentes, dans lequel chaque paire de clés dans le graphique dépend d'une autre paire de clés par le biais d'un texte chiffré exactement.

7. Procédé selon l'une des revendications précédentes, dans lequel le jeu de paires de clés comprend deux paires de clés au choix, respectivement avec une clé privée et une clé publique, comprenant en outre les étapes suivantes :
- génération d'un quatrième texte chiffré par cryptage de la clé privée de la première paire de clés parmi les paires de clés au choix avec la clé publique de la deuxième paire de clés parmi les paires de clés au choix,
- enregistrement du quatrième texte chiffré.

8. Procédé selon l'une des revendications précédentes, dans lequel des caractéristiques de classification (236) sont enregistrées ensemble avec les textes chiffrés, dans lequel les caractéristiques de classification (236) déterminent une validité des textes chiffrés, la validité indiquant qu'après l'expiration de la validité, une utilisation des textes chiffrés pour des opérations de traitement de données doit être empêchée.

9. Procédé selon la revendication 8, dans lequel les caractéristiques de classification (236) correspondent à une validité en fonction d'un intervalle de temps et/ou à une validité en fonction d'un nombre d'utilisations et/ou à une validité en fonction du type d'utilisation.

10. Produit de programme informatique avec des instructions exécutables par un processeur, pour l'exécution des étapes de procédé du procédé selon l'une des revendications précédentes 1-9.

11. Système de traitement de données pour la génération d'un jeu de paires de clés cryptographiques asymétriques pour le cryptage d'objets de données, dans lequel le jeu de paires de clés comprend une première paire de clés (K1) et une deuxième paire de clés (K2), dans lequel la première paire de clés est formée par une première clé privée (G1) et une première clé publique (O1) et la deuxième paire de clés est formée par une deuxième clé privée (G2) et une deuxième clé publique (02), dans lequel un premier texte chiffré (C_G2_O1) est attribué à la première et à la deuxième paire de clés, dans lequel le texte chiffré est formé par un cryptage de la deuxième clé privée (G2) avec la première clé publique (01), le système de traitement de données comprenant :
- des moyens (222) pour l'ajout d'une troisième paire de clés cryptographiques asymétriques (K3) au jeu de paires de clés, la troisième paire de clés étant formée par une troisième clé privée (G3) et une troisième clé publique (03),
- des moyens (222) pour la génération d'un deuxième texte chiffré (C_G3_O1), par cryptage de la troisième clé privée (G3) avec la première clé publique (O1),
- des moyens (222) pour l'enregistrement du deuxième texte chiffré (234),
dans lequel le jeu de paires de clés présente une structure de graphique orientée, les noeuds du graphique représentant les paires de clés, une dépendance entre une paire de clés précédente et une paire de clés suivante immédiatement consécutive à la paire de clés précédente dans le graphique étant formée par un texte chiffré, le texte chiffré étant formé par cryptage de la clé privée de la paire de clés suivante avec la clé publique de la paire de clés précédente, chaque paire de clés dans le graphique étant dépendante d'une autre paire de clés par le biais d'au moins un texte chiffré, à l'exception de la paire de clés formant le noeud racine du graphique, dans lequel il est prévu un premier système de traitement de données (200) et un deuxième système de traitement de données (224) reliés entre eux par le biais d'un réseau (226), le premier système de traitement de données (200) étant conçu pour le calcul des textes chiffrés et pour l'exécution d'opérations de cryptage et de décryptage des objets de données, et le deuxième système de traitement de données (224) étant conçu pour le stockage de données et pour la détermination de séquences de texte chiffré, et le premier système de traitement de données (200) étant un centre fiable, tel qu'un centre de certification ou un trust-center.

12. Système de traitement de données selon la revendication 11, **caractérisé en ce que** le système de traitement de données (200) comprend des moyens d'entrée (202), un écran (204) et une interface (206) pour la communication avec un appareil externe, en particulier une carte à puce (216) et un réseau (226).

13. Système de traitement de données selon la revendication 11 ou 12, **caractérisé en ce que** le module de traitement de données (200) présente un module (212) pour le calcul de textes chiffrés et un module (214) pour l'exécution d'opérations cryptographiques tels que le cryptage et le décryptage d'objets de données.

14. Système de traitement de données selon l'une des revendications précédentes 11-13, **caractérisé en ce que** le deuxième système de traitement de données (224) comprend un processeur (244) pour l'exécution d'instructions de programme, telles que la détermination d'une séquence de textes chiffrés et/ou la validation de la validité d'un texte chiffré, et une interface (246) pour la communication avec le réseau (226).

15. Système de traitement de données selon l'une des revendications précédentes 11-14, **caractérisé en ce qu'**il est prévu une carte à puce (216) avec un processeur (222), sur laquelle est stockée une clé privée (218), le processeur (222) exécutant l'opération de décryptage du texte chiffré.
